# EUROPÄISCHE PATENTSCHRIFT

(11) **EP 2 353 052 B1**
(45) Veröffentlichungstag und Bekanntmachung des Hinweises auf die Patenterteilung: **02.10.2013**
(21) Anmeldenummer: 09806078.3
(22) Anmeldetag: 20.11.2009
(51) Int. Cl.: G05B 23/02

(54) **SICHERHEITSSTEUERUNG UND VERFAHREN ZUM STEUERN EINER AUTOMATISIERTEN ANLAGE**
SAFETY CONTROLLER AND METHOD FOR CONTROLLING AN AUTOMATED INSTALLATION
COMMANDE DE SÉCURITÉ ET PROCÉDÉ DE COMMANDE D UNE INSTALLATION AUTOMATISÉE

(30) Priorität: 25.11.2008 DE 102008060010
(43) Veröffentlichungstag der Anmeldung: 10.08.2011
(73) Patentinhaber: Pilz GmbH & Co. KG, 73760 Ostfildern (DE)
(72) Erfinder: ZONDLER, Martin, 73760 Ostfildern (DE); EHRHART, Helmut, 70372 Stuttgart (DE); WOEHRLE, Stefan, 73760 Ostfildern (DE)
(74) Vertreter: Duhme, Torsten
(86) Internationale Anmeldenummer: PCT/EP2009/008269
(87) Internationale Veröffentlichungsnummer: WO 2010/060574

(56) Entgegenhaltungen:
- EP-A1- 1 396 772
- EP-A1- 1 708 056
- EP-A1- 1 855 172
- EP-A2- 2 034 378
- DE-A1- 10 315 526
- DE-A1-102004 003 569
- JP-A- 2003 186 536
- US-A1- 2007 297 557
- US-A1- 2008 079 596

## Beschreibung

Die vorliegende Erfindung betrifft eine Sicherheitssteuerung und ein Verfahren zum Steuern einer automatisierten Anlage, die eine Vielzahl von Sensoren und eine Vielzahl von Aktoren umfasst.

Eine Sicherheitssteuerung im Sinne der vorliegenden Erfindung ist ein Gerät, oder eine Vorrichtung, das bzw. die von Sensoren gelieferte Eingangssignale aufnimmt und daraus durch logische Verknüpfungen und unter Umständen weiterer Signal- oder Datenverarbeitungsschritte Ausgangssignale erzeugt. Die Ausgangssignale können dann Aktoren zugeführt werden, die dann in Abhängigkeit von den Eingangssignalen gezielte Aktionen oder Reaktionen in der Umgebung bewirken.

Ein bevorzugtes Anwendungsgebiet für derartige Sicherheitssteuerungen ist im Bereich der Maschinensicherheit zur Überwachung von Not-Aus-Tastern, Zwei-Hand-Steuerungen, Schutztüren oder Lichtgittern. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktors den gefahrbringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlage oder Maschine gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der Europäischen Norm EN 954-1 oder einer vergleichbaren Norm, beispielsweise der Norm IEC 6158 oder der Norm EN ISO 13849-1 niedergelegt sind. Im Folgenden wird daher unter einer Sicherheitssteuerung ein Gerät bzw. eine Vorrichtung verstanden, die zumindest die Sicherheitskategorie 3 der genannten Europäischen Norm EN 954-1 erfüllt.

Eine programmierbare Sicherheitssteuerung bietet dem Anwender die Möglichkeit, die logischen Verknüpfungen und ggf. weitere Signal- oder Datenverarbeitungsschritte mit Hilfe einer Software, dem sogenannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Anwenderprogramm kann beispielsweise mit Hilfe eines handelsüblichen Personalcomputers (PC) und unter Verwendung entsprechend eingerichteter Softwareprogramme erstellt werden.

Das Erkennen von Fehlfunktionen ist auf dem Gebiet der Sicherheitssteuerung von zentraler Bedeutung. Denn es muss gewährleistet sein, dass eine gesteuerte Maschine oder Anlage bei Auftreten einer Fehlfunktion in einen sicheren Zustand überführt wird.

Neben dem eigentlichen Erkennen einer Fehlfunktion und dem Ergreifen entsprechender Maßnahmen, mit denen die gesteuerte Maschine oder Anlage in einen sicheren Zustand überführt wird, ist es aber auch wichtig, beispielsweise dem Bediener der gesteuerten Maschine oder Anlage oder einer anderen Person Informationen über eine vorliegende Fehlfunktion zukommen zu lassen. Hierzu wird bei aus der Praxis bekannten Sicherheitssteuerungen und Verfahren bei Auftreten einer Fehlfunktion eine diese repräsentierende Diagnosemeldung mittels einer Anzeigeeinheit angezeigt. Dabei hängt die angezeigte Diagnosemeldung lediglich von der Fehlfunktion ab, die durch eine entsprechende Diagnoseeinheit festgestellt wurde.

Das Erkennen einer auftretenden Fehlfunktion entspricht dem Feststellen, welcher von mehreren Systemzuständen einer Sicherheitssteuerung zu einem definierten Zeitpunkt vorliegt.

Die vorstehenden Überlegungen gelten nicht nur für das Erkennen für Fehlfunktionen und somit für das Feststellen von Systemzuständen einer Sicherheitssteuerung, sie gelten ebenso für das Feststellen von Prozesszuständen einer zu steuernden Anlage oder Maschine.

Aus US 2007/0297557 A1 ist ein Informationsverarbeitungssystem für Produktionsanlagen bekannt, bei dem die Anzeige von Diagnosemeldungen von der Berechtigung eines Bedieners und von einem Wartungszustand der Anlage abhängt. In einem Ausführungsbeispiel ist eine Steuereinheit dargestellt, die über ein Kommunikationsnetzwerk mit einer Anzahl von Feldgeräten verbunden ist. Ein Endgerät beinhaltet eine Anzeigeeinheit, eine Erfassungseinheit zum Erfassen ein Zugriffsberechtigung und eine Diagnoseauswerteeinheit, die in Abhängigkeit von Diagnoseeingangssignalen feststellt, welcher Betriebszustand zu einem definierten Zeitpunkt vorliegt. In Abhängigkeit von der Zugriffsberechtigung des Bedieners und der Abhängigkeit davon, ob zu einer Alarmmeldung bereits eine bekannte Handlungsanweisung in einem Speicher vorliegt, werden dem Bediener Alarmmeldungen angezeigt oder nicht und ggf. Handlungsanweisungen bzw. Zugriff auf Steuerbefehle gewährt.

Aus US 2008/0079596 A1 ist ein industrielles Feldgerät mit einem Alarmgenerator bekannt. Der vom Alarmgenerator erzeugte Alarm kann in Abhängigkeit von einem aktuellen Kontext und/oder Bedienerpräferenzen erzeugt werden. Auch das Format und der Inhalt des Alarms kann den Nutzerbedürfnissen angepasst werden. Kontextzusammenhänge sollen aus einem ERP (Enterprise Ressource Planning) System entnommen werden.

DE 10 2004 003 569 A1 offenbart ein integriertes Sicherungssystem in einer Prozessanlage mit einem Prozesssteuerungssystem und einem Sicherheitssystem, das eine gemeinsame Hard- und Software für Sicherung, Kommunikation und Anzeige verwendet. Alarme können in Abhängigkeit von einer Bedienerkennung gefiltert werden, so dass Bediener auf Alarme einer bestimmten Kategorie oder eines bestimmten Typs beschränkt sein können.

EP 1 708 056 A1 schlägt ein System zum Erzeugen und darstellen von Meldungen und/oder Alarmen in einem Automatisierungssystem vor, wobei die Meldungen und/oder Alarme in Abhängigkeit vom Zustand einer Produktionsanlage oder eines Prozesses unterschiedlich angezeigt werden. Zu diesem Zweck soll der Meldungsauslöser Attribute entsprechend dem Anlagenzustand an die Meldung anhängen, um die Wichtigkeit einer Meldung dynamisch zu verändern.

EP 1 855 172 A1 beschreibt ein Verfahren zur Alarmunterdrückung in einer Prozessanlage, bei dem in Abhängigkeit von einem bestimmten Prozesszustand bestimmte Alarminformationen nicht zur Anzeige gebracht werden. Auf diese Weise sollen nicht relevante Prozessalarme ausgeblendet werden.

Die bekannten Sicherheitssteuerungen und Verfahren gewährleisten zwar ein zuverlässiges Feststellen von Systemzuständen einer Sicherheitssteuerung und von Prozesszuständen einer zu steuernden Anlage, sie sind jedoch hinsichtlich der Informationsvermittlung, d.h. hinsichtlich der Vermittlung derjenigen Information, die die festgestellten Systemzustände und Prozesszustände repräsentiert, noch nicht optimal.

Es ist daher eine Aufgabe der vorliegenden Erfindung, eine Sicherheitssteuerung und ein Verfahren der eingangs genannten Art weiterzubilden, um die Vermittlung derjenigen Information, die einen festgestellten Prozesszustand einer zu steuernden Anlage oder eines Systemzustandes einer Sicherheitssteuerung repräsentiert, flexibler zu gestalten, und somit die anzuzeigende Information an äußere Gegebenheiten noch besser anpassen zu können.

Diese Aufgabe wird durch eine Sicherheitssteuerung der eingangs genannten Art gelöst, die folgenden Mittel aufweist: Eine Steuereinheit, der eine Vielzahl von Steuerungseingangssignalen von den Sensoren zugeführt sind, wobei die Steuereinheit dazu ausgebildet ist, in einem Automatikbetrieb eine Vielzahl von Steuerungsausgangssignalen in Abhängigkeit von den Steuerungseingangssignalen gemäß einem in ihr ablaufenden Anwenderprogramm zu erzeugen, wobei mit der Vielzahl von Steuerungsausgangssignalen die Vielzahl von Aktoren angesteuert werden, eine Diagnoseauswerteeinheit, der eine Anzahl von Diagnoseeingangssignalen zugeführt sind, wobei die Diagnoseauswerteeinheit dazu ausgebildet ist, in Abhängigkeit von der Anzahl von Diagnoseeingangssignalen festzustellen, welcher von mehreren Betriebszuständen zu einem definierten Zeitpunkt vorliegt, wobei die mehreren Betriebszustände zumindest einen Prozesszustand der zu steuernden Anlage und zumindest einen Systemzustand der Sicherheitssteuerung beinhalten, wobei die Diagnoseauswerteeinheit ein Betriebszustandssignal erzeugt, welches einen festgestellten Betriebszustand repräsentiert, eine Anzeigeeinheit, die dazu ausgebildet ist, Diagnosemeldungen anzuzeigen, eine Betriebsartenwahleinheit, die dazu ausgebildet ist, eine von mehreren untereinander unterschiedlichen Sonderbetriebsarten auszuwählen, wobei sich die Sonderbetriebsarten jeweils von dem Automatikbetrieb unterscheiden, wobei die Betriebswahleinheit ein Sonderbetriebsartensignal bereitstellt, welches die ausgewählte Sonderbetriebsart repräsentiert, wobei dieses Sonderbetriebsartensignal der Steuereinheit zugeführt wird, um die Anlage in der ausgewählten Sonderbetriebsart zu betreiben, eine Erfassungseinheit, die dazu ausgebildet ist, eine Zugriffsberechtigung zu erfassen, die einer mit der Sicherheitssteuerung interagierenden Person, insbesondere einer die Anzeigeeinheit ablesenden Person, zugeordnet ist, wobei die Erfassungseinheit ein Zugriffsberechtigungssignal bereitstellt, welches die erfasste Zugriffsberechtigung repräsentiert, und eine Diagnoseauswahleinheit, der das Betriebszustandssignal sowie das Sonderbetriebsartensignal und das Zugriffsberechtigungssignal zugeführt sind, wobei die Diagnoseauswahleinheit in Abhängigkeit des festgestellten Betriebszustands und in Abhängigkeit der ausgewählten Sonderbetriebsart und der erfassten Zugriffsberechtigung eine den festgestellten Betriebszustand zu repräsentierende Diagnosemeldung ermittelt, wobei die Diagnoseauswahleinheit ein die Diagnosemeldung repräsentierendes Diagnosesignal erzeugt, welches der Anzeigeeinheit zum Anzeigen der Diagnosemeldung zugeführt wird, wobei in der Diagnoseauswahleinheit eine Vielzahl von untereinander unterschiedlichen Diagnosemeldungen hinterlegt sind, wobei jede dieser Diagnosemeldungen den festgestellten Betriebszustand repräsentiert, wobei die Diagnoseauswahleinheit eine dieser Diagnosemeldungen in Abhängigkeit der ausgewählten Sonderbetriebsart und der erfassten Zugriffsberechtigung auswählt, wobei die erfassten Zugriffsberechtigung einer aus einer Vielzahl von definierten, untereinander unterschiedlichen Zugriffsberechtigungen ist, wobei die Vielzahl von untereinander unterschiedlichen Diagnosemeldungen für jeden der untereinander unterschiedlichen Sonderbetriebszustände und für jede der untereinander unterschiedlichen Zugriffsberechtigungen eine jeweils zugeordnete Diagnosemeldung enthält.

Die Aufgabe wird ferner durch ein Verfahren der eingangs genannten Art gelöst, bei dem folgende Schritte ausgeführt werden:

- Zuführen einer Vielzahl von Steuerungseingangssignalen von den Sensoren zu einer Steuereinheit, wobei die Steuereinheit dazu ausgebildet ist, in einem Automatikbetrieb eine Vielzahl von Steuerungsausgangssignalen in Abhängigkeit von den Steuerungseingangssignalen gemäß einem in ihr ablaufenden Anwenderprogramm zu erzeugen, wobei mit der Vielzahl von Steuerungsausgangssignalen die Vielzahl von Aktoren angesteuert werden,

- Feststellen in Abhängigkeit in Abhängigkeit von einer Anzahl von Diagnoseeingangssignalen, welcher von mehreren Betriebszuständen zu einem definierten Zeitpunkt vorliegt, wobei die mehreren Betriebszustände zumindest einen Prozesszustand der zu steuernden Anlage und zumindest einen Systemzustand der Sicherheitssteuerung beinhalten, und Erzeugen eine Betriebszustandssignals, welches einen festgestellten Betriebszustand repräsentiert,

- Auswählen einer von mehreren untereinander unterschiedlichen Sonderbetriebsarten, wobei sich die Sonderbetriebsarten jeweils von dem Automatikbetrieb unterscheiden, und Bereitstellen eines Sonderbetriebsartensignals, welches die ausgewählte Sonderbetriebsart repräsentiert,

- Erfassen einer Zugriffsberechtigung, die einer mit der Sicherheitssteuerung interagierenden Person, insbesondere einer eine Anzeigeeinheit ablesenden Person, zugeordnet ist, und Bereitstellen eines Zugriffsberechtigungssignals, welches die erfasste Zugriffsberechtigung repräsentiert,

- Zuführen des Betriebszustandssignals sowie des Sonderbetriebsartensignals und des Zugriffsberechtigungssignals zu einer Diagnoseauswahleinheit,

- Ermitteln einer den festgestellten Betriebszustand repräsentierenden Diagnosemeldung in Abhängigkeit des festgestellten Betriebszustands und in Abhängigkeit der ausgewählten Sonderbetriebsart und der erfassten Zugriffsberechtigung, und Erzeugen eines die Diagnosemeldung repräsentierenden Diagnosesignals in der Diagnoseeinheit, und

- Zuführen des Diagnosesignals zu der Anzeigeeinheit zum Anzeigen der Diagnosemeldung, wobei
in der Diagnoseauswahleinheit eine Vielzahl von untereinander unterschiedlichen Diagnosemeldungen hinterlegt sind, wobei jede dieser Diagnosemeldungen den festgestellten Betriebszustand repräsentiert, wobei die Diagnoseauswahleinheit eine dieser Diagnosemeldungen in Abhängigkeit der ausgewählten Sonderbetriebsart und der erfassten Zugriffsberechtigung auswählt, wobei die erfassten Zugriffsberechtigung einer aus einer Vielzahl von definierten, untereinander unterschiedlichen Zugriffsberechtigungen ist, wobei die Vielzahl von untereinander unterschiedlichen Diagnosemeldungen für jeden der untereinander unterschiedlichen Sonderbetriebszustände und für jede der untereinander unterschiedlichen Zugriffsberechtigungen eine jeweils zugeordnete Diagnosemeldung enthält.

Der neuen Sicherheitssteuerung und dem entsprechenden Verfahren liegt als Ansatz zugrunde, eine Diagnosemeldung, die einen festgestellten Betriebszustand repräsentiert, in Abhängigkeit des festgestellten Betriebszustandes und zusätzlich in Abhängigkeit einer ausgewählten Sonderbetriebsart und einer erfassten Zugriffsberechtigung zu ermitteln, wobei es sich bei dem festgestellten Betriebszustand um einen Prozesszustand einer zu steuernden Anlage oder um einen Systemzustand der Sicherheitssteuerung handeln kann. Durch diesen Ansatz besteht nun die Möglichkeit, die Vermittlung derjenigen Information, die einen festgestellten Prozesszustand der zu steuernden Anlage oder einen festgestellten Systemzustand der Sicherheitssteuerung repräsentiert, flexibel gestalten zu können, und somit die anzuzeigende Information an äußere Gegebenheiten anpassen zu können.

Bevor nachfolgend die einzelnen Vorteile der erfindungsgemäßen Sicherheitssteuerung des erfindungsgemäßen Verfahrens dargelegt werden, werden zunächst zum besseren Verständnis einige Begriffe erläutert.

Ein Systemzustand einer Sicherheitssteuerung ist ein Zustand, dem zum einen die Sicherheitssteuerung als solche, d.h. die bauliche Einheit, in der die Logikkomponenten, beispielsweise Prozessoren und Speicher, untergebracht sind, die für die Realisierung von Steuerungsaufgabe erforderlich sind, und zum anderen diejenigen Komponenten, beispielsweise Sensoren und Aktoren, der zu steuernden Anlage, die mit dieser baulichen Einheit elektrisch verbunden sind, und darüber hinaus sogenannte Meldegeräte, beispielsweise Betriebsartenwahlschalter, die ebenfalls mit dieser baulichen Einheit verbunden sind, einnehmen können. Mit umfasst bei dieser Betrachtung sind auch sämtliche Verdrahtungen. Mit Blick auf eine Diagnose sind vor allem diejenigen Systemzustände von Interesse, bei denen an einer der vorstehend aufgezählten Komponenten ein Fehler auftritt.

Ein Prozesszustand der zu steuernden Anlage ist ein Zustand, den die zu steuernde Anlage aufgrund einer Anwendung annehmen kann, wobei die Anwendung durch das in der Sicherheitssteuerung ablaufende Anwenderprogramm definiert ist.

Unter einer Betriebsart, in der eine zu steuernde Anlage betrieben werden kann, wird in erster Linie eine der Betriebsarten verstanden, die in der Norm DIN EN 12417 beschrieben sind. Hierbei kann es sich um einen Automatikbetrieb handeln, bei dem die zu steuernde Anlage bei geschlossenen Schutzeinrichtungen betrieben wird. Darüber hinaus kann es sich um eine der beiden in besagter Norm beschriebenen Sonderbetriebsarten handeln. Zum einen um einen Einrichtbetrieb, bei dem ein Bediener bei geöffneter Schutztür, deutlich verlangsamter Geschwindigkeit und weiteren Sicherheitsmaßnahmen in den Prozess eingreifen kann, um die Anlage für den Automatikbetrieb vorzubereiten. Zum anderen eine als "erweiterten manuellen Eingriff" bezeichnete Betriebsart, bei der ein Bediener beispielsweise eine Maschine bei geöffneter Schutztür betreiben kann. Dem Bediener steht dabei eine reduzierte Auswahl an Maschinenfunktionen zur Verfügung, die er nur aktivieren kann, wenn einen Zustimmschalter gedrückt hält. Darüber hinaus kommt eine weitere Betriebsart in Betracht, die als "Prozessbeobachtung" bezeichnet ist. Hierbei kann ein Bediener eine Maschine bei geöffneter Schutztüre betreiben, ohne dabei einen Zustimmschalter gedrückt halten zu müssen. Diese dritte Sonderbetriebsart ist in vorstehender Norm nicht beschrieben. Ferner sind weitere Sonderbetriebsarten denkbar, die beispielsweise von dem Betreiber einer Anlage selbst definiert werden. Als Beispiel sei hier eine als "Wochenendbetrieb" bezeichnete Sonderbetriebsart angeführt. Bei dieser Sonderbetriebsart wird eine große Anlage, die zur Erzielung einer sehr hohen Produktivität über mehrere identisch aufgebaute Einheiten verfügt, die eine Parallelbearbeitung zulassen, an einem Wochenende in reduziertem Umfang betrieben. D.h. am Wochenende ist lediglich ein Teil dieser Einheiten in Betrieb, während ein anderer Teil dieser Einheiten stillgelegt ist.

Unter einer Zugriffsberechtigung ist die Erlaubnis zu verstehen, die einer Person zugeordnet ist und somit dieser zugestanden wird, Eingriffe an einer zu steuernden Anlage vornehmen zu können, beispielsweise eine Anlage in einer der vorstehend beschriebenen Sonderbetriebsarten betreiben zu können. Ebenso wie es unterschiedliche Sonderbetriebsarten gibt, gibt es auch unterschiedliche Zugriffsberechtigungen. Der Bediener einer Maschine oder Anlage hat in der Regel keinerlei Zugriffsberechtigung, d.h. er kann keine Angriffe an der Maschine oder Anlage vornehmen. Ein Instandhalter hat dagegen eine niedrige Zugriffsberechtigung, er kann in einem bestimmten Rahmen Eingriffe an der Maschine oder Anlage vornehmen. So kann ein Instandhalter beispielsweise Behälter für Kühlschmierstoffe oder Hydraulikflüssigkeit nachfüllen. Ein Einrichter, der eine Maschine oder Anlage im Einrichtbetrieb betreiben kann, hat eine mittlere Zugriffsberechtigung. Er kann sämtliche Eingriffe an einer Maschine oder Anlage vornehmen, die für die Vorbereitung des Automatikbetriebes erforderlich sind. Der Ersteller eines Anwenderprogramms, welches in der Sicherheitssteuerung abläuft und den Automatikbetrieb einer Maschine oder Anlage festlegt, hat eine große Zugriffsberechtigung. Er kann an einer Maschine oder Anlage Eingriffe vornehmen, die über diejenigen hinausgehen, die ein Einrichter vornehmen kann. Was den Ersteller eines Anwenderprogramms angeht, so sind die beiden folgenden Konstellationen zu unterscheiden: Handelt es sich um die Sicherheitssteuerung einer Werkzeugmaschine, die von einem Werkzeugmaschinenhersteller in nennenswerten Stückzahlen hergestellt wird, wie dies beispielsweise bei Drehmaschinen, Fräsmaschinen oder Bearbeitungszentren der Fall ist, so der Ersteller des Anwenderprogramms in der Regel ein Mitarbeiter des Werkzeugmaschinenherstellers. Handelt es sich dagegen um die Sicherheitssteuerung einer großen Maschinenanlage, die kundenspezifisch konfiguriert ist, und von der in der Regel lediglich das eine beim Anwender stehende Exemplar existiert, wie es beispielsweise bei Anlagen in der chemischen Industrie der Fall ist, so der Ersteller eines Anwenderprogramms in der Regel ein Mitarbeiter des Betreibers des großen Maschinenanlage. Der Hersteller der Sicherheitssteuerung als solche, d.h. der Hersteller der baulichen Einheit, in der die Logikkomponenten untergebracht sind, die für die Realisierung von Steuerungsaufgaben erforderlich sind, hat ebenfalls eine große Zugriffsberechtigung. Gegenüber dem Ersteller eines Anwenderprogramms, bei dem der Schwerpunkt auf der Ansteuerung einer Maschine oder Anlage, d.h. auf der Realisierung von Bewegungsabläufen liegt, liegt beim Hersteller der Sicherheitssteuerung der Schwerpunkt auf dem Betrieb der Sicherheitssteuerung als Solche. Für einen Sicherheitsbeauftragten, der beispielsweise überprüfen möchte, ob die in einer zu steuernden Anlage verbauten Schutzvorrichtungen entsprechend den gesetzlichen Vorgaben in vorgegebenen zeitlichen Abständen zu Testzwecken betätigt werden müssen, liegt der Schwerpunkt für Zugriffsberechtigung auf dem Auslesen von Diagnosespeichem und weniger auf dem Ermöglichen von Eingriffen an der zu steuernden Anlage.

Unter Berücksichtigung der vorstehenden Ausführungen ergeben sich für die Sicherheitssteuerung und das Verfahren verschiedene Vorteile.

Die den festgestellten Betriebszustand repräsentierende Diagnosemeldung in Abhängigkeit der erfassten Zugriffsberechtigung zu vermitteln, ist hinsichtlich der Anpassung der Vermittlung von Information an äußere Gegebenheiten sehr effektiv. Durch diese Maßnahme lässt sich eine beispielsweise auf einer Anzeigeeinheit anzuzeigende Diagnosemeldung inhaltlich an die Person, die die Diagnosemeldung an der Anzeigeeinheit abliest, anpassen. Insbesondere ist eine Anpassung an die Rolle, die der Person in Bezug auf die zu steuernde Anlage oder die Sicherheitssteuerung als solche zugeordnet ist möglich, wobei diese Rolle beispielsweise über die Zugriffsberechtigung definiert ist.

Vor allem in Betracht auf einen festgestellten Systemzustand der Sicherheitssteuerung ergibt sich die größte Effektivität. Wie bereits ausgeführt, handelt es sich bei einem festgestellten Systemzustand der Sicherheitssteuerung in der Regel um einen festgestellten Fehlerzustand. Folglich wird mit einer Diagnosemeldung auf den festgestellten Fehler hingewiesen.

Üblicherweise enthält eine Diagnosemeldung vier Informationsanteile: Einen "was"-Anteil, der darüber informiert, was passiert ist, d.h. was für eine Störung oder was für ein Fehler vorliegt. Einen "wo"-Anteil, der darüber informiert, wo die Störung oder der Fehler passiert ist. Einen "wie"-Anteil, der darüber informiert, wie die Störung oder der Fehler zu beheben ist. Einen "wer"-Anteil, der darüber informiert, wer die Störung oder den Fehler beheben kann.

Gerade hier ist es besonders vorteilhaft, die anzuzeigende Diagnosemeldung an die Fähigkeit, konkret an die Zugriffsberechtigung, die der Person zugeordnet ist, die die Anzeigeeinheit abliest, anzupassen. Bei einem Bediener reicht es in der Regel aus, ihm mitzuteilen, was passiert bzw. defekt ist und wer die Störung beheben kann. Insbesondere die Information, wer die Störung beheben kann, wer also der richtige Ansprechpartner ist, führt zu einer Zeitersparnis und somit zu einer Kostenersparnis, da direkt die zuständige Person kontaktiert werden kann. Bei einem Bediener ist es nicht erforderlich, anzuzeigen, wie die Störung behoben werden kann, da er mangels Zugriffsberechtigung nicht in der Lage ist, die Störung zu beheben. Bei einem Instandhalter enthält die Diagnosemeldung, sofern es sich um eine Störung handelt, die er aufgrund seiner Zugriffsberechtigung beheben kann, neben der Information, was passiert ist, auch eine Information darüber, wo die Störung aufgetreten ist und wie diese zu beheben ist. Sofern es sich um eine Störung handelt, die er aufgrund seiner Zugriffsberechtigung nicht beheben kann, reicht es aus, wenn die Diagnosemeldung eine Information darüber enthält, was für eine Störung vorliegt und wer diese beheben kann. Bei einem Einrichter, bei einem Ersteller des Anwenderprogramms und bei einem Hersteller der Sicherheitssteuerung wird eine Diagnosemeldung in der Regel eine Information darüber enthalten, was passiert ist, wo dies passiert ist, wie die Störung zu beheben ist und wer dies vornehmen kann. Dabei wird ausgehend vom Einrichter hin zum Ersteller des Anwenderprogramms und zum Hersteller der Sicherheitssteuerung der Informationsanteil, wie eine Störung zu beheben ist, zunehmen und gleichzeitig der Informationsanteil, der eine Störung beheben kann, abnehmen, da ausgehend vom Einrichter hin zum Ersteller eines Anwenderprogramms und zum Hersteller einer Sicherheitssteuerung die Eingriffsmöglichkeiten in die zu steuernde Anlage bzw. die Sicherheitssteuerung aufgrund der zunehmenden Zugriffsberechtigung anwächst. Verglichen mit dem Einrichter und dem Ersteller des Anwenderprogramms wird beim Hersteller der Sicherheitssteuerung der Schwerpunkt hinsichtlich des Informationsbestandteiles, was passiert ist, schwerpunktmäßig auf der Sicherheitssteuerung liegen. Bei einem Hersteller einer Sicherheitssteuerung betreffend die angezeigten Störungen beispielsweise in der Sicherheitssteuerung enthaltene Logikhardwarekomponenten oder das in der Sicherheitssteuerung implementierte Betriebssystem. Für einen Sicherheitsbeauftragten bestimmte Diagnosemeldungen werden schwerpunktmäßig Informationen darüber enthalten, was für Störungen aufgetreten sind, und ergänzend Informationen darüber, wann diese aufgetreten sind.

Auch in Betracht auf einen festgestellten Prozesszustand der zu steuernden Anlage ist es sehr effektiv, die den festgestellten Prozesszustand repräsentierende Diagnosemeldung in Abhängigkeit der erfassten Zugriffsberechtigung zu ermitteln. Die einen festgestellten Prozesszustand repräsentierende Diagnosemeldung enthält eine Information darüber, welchen durch das Anwenderprogramm definierten Zustand die zu steuernde Anlage einnimmt. Auch in diesem Fall bietet es sich an, die mittels der Anzeigeeinheit angezeigte Information inhaltlich an denjenigen anzupassen, der die Diagnosemeldung an der Anzeigeeinheit abliest. So ist es für einen Bediener, einen Instandhalter und einen Sicherheitsbeauftragten von großer Bedeutung, über einzelne Prozesszustände, die zu steuernde Anlage zu einem definierten Zeitpunkt einnimmt, unterrichtet zu werden. Wohingegen für einen Einsteller, einen Ersteller eines Anwenderprogramms und den Hersteller einer Sicherheitssteuerung dies weniger wichtig ist. Bei diesen Personen bietet es sich beispielsweise an, Diagnosemeldungen, die einen Prozesszustand repräsentieren, auf den Informationsgehalt "fehlerfreier Betrieb" oder "fehlerhafter Betrieb" zu reduzieren. Unter Umständen kann sogar auf die Anzeige solcher Diagnosemeldungen verzichtet werden. Insgesamt wird dadurch die Ablesbarkeit bzw. Übersichtlichkeit an einer Anzeigeeinheit erhöht.

Auch in Betracht auf einen festgestellten Prozesszustand der zu steuernden Anlage ist es von Vorteil, die diesen Prozesszustand repräsentierende Diagnosemeldung in Abhängigkeit der ausgewählten Sonderbetriebsart zu ermitteln. Wird die Anlage im Automatikbetrieb betrieben, so sollten sämtliche Diagnosemeldungen, die festgestellte Prozesszustände betreffen, angezeigt werden. Dabei empfiehlt es sich jedoch, den Informationsgehalt der Diagnosemeldung an die Rolle des Lesers, dem die Diagnosemeldung mittels einer Anzeigeeinheit angezeigt wird, anzupassen. So reicht es beispielsweise aus, dem Bediener einer Anlage mitzuteilen, dass ein bestimmter Flüssigkeitsbehälter aufzufüllen ist. Dagegen kann einem Instandhalter zusätzlich mitgeteilt werden, wo sich dieser Behälter in der Anlage befindet und wo beispielsweise die nachzufüllende Flüssigkeit bevorratet ist. Für einen Sicherheitsbeauftragten kann die zu vermittelnde Information beispielsweise hinsichtlich der von ihm vorzunehmenden Auswertungen aufbereitet werden. Die vorstehenden Ausführungen zeigen, dass es von besonderem Vorteil ist, Diagnosemeldungen sowohl in Abhängigkeit der ausgewählten Sonderbetriebsart als auch in Abhängigkeit der erfassten Zugriffsberechtigung zu ermitteln. Dies vor allem deshalb, weil die Zugriffsberechtigung, die einer die Anzeigeeinheit ablesenden Person zugeordnet ist, nicht zwangsläufig mit der ausgewählten Sonderbetriebsart korrelieren muss, wie dies die vorstehenden Ausführungen aufzeigen. Wird die Anlage in dem Einrichtbetrieb betrieben, so bietet es sich beispielsweise an, Diagnosemeldungen, die Prozesszustände repräsentieren, die beispielsweise auf eine geöffnete Schutztüre zurückgehen, zu unterbinden. Dies deshalb, weil diese Diagnosemeldungen keinen Informationsgehalt haben, der über den Kenntnisstand des Einrichters, der im Rahmen des Einrichtbetriebes Maßnahmen an der zu steuernden Anlage vornimmt, hinausgehen. Der Einrichter weiß, dass die Schutztüre geöffnet ist. Dahingegen können speziell auf den Einrichtbetrieb abgestimmte Diagnosemeldungen angezeigt werden, die beispielsweise einen Informationsgehalt dahingehend enthalten, ob ein vom Einrichter geplanter Bewegungsablauf mit den Gegebenheiten der Maschine vereinbar ist. Wir eine Anlage im Wochenendbetrieb betrieben, so empfiehlt es sich, Diagnosemeldungen, die Prozesszustände repräsentieren, die von aufgrund des Wochenendbetriebes abgeschalteten Anlagenteilen herrühren, zu unterbinden, da diese Diagnosemeldungen bei dieser Sonderbetriebsart nicht beachtet werden müssen.

Auch ist es in Betracht auf einen festgestellten Systemzustand der Sicherheitssteuerung besonders effektiv, Diagnosemeldungen, die einen Systemzustand repräsentieren, in Abhängigkeit der ausgewählten Sonderbetriebsart zu ermitteln. Wird eine Anlage im Automatikbetrieb betrieben, so sollten sämtliche Diagnosemeldungen, die Systemzustände repräsentieren, angezeigt werden. Auch ist es hierbei in der Regel erforderlich, neben der Information, was wo passiert ist, auch anzugeben, wer die Störung beheben kann. Wird dagegen die Anlage in einer Betriebsart betrieben, in der Reparaturarbeiten an der Anlage vorgenommen werden können, so ist es nicht erforderlich, dass Diagnosemeldungen, die einen Systemzustand repräsentieren, Angaben darüber enthalten, wer eine Störung beheben kann, da für gewöhnlich Personen, die die Reparaturen vornehmen, über die entsprechende Befähigung verfügen. In solch einem Fall ist es vielmehr von Vorteil, Information darüber, was zur Behebung der Störung durchzuführen ist, anzuzeigen. Ebenso kann es von Vorteil sein, Datenblätter oder ähnliche Informationen über eine zu reparierende oder zu ersetzende Komponente anzuzeigen.

Die vorstehenden Ausführungen zeigen, dass es mit dem erfindungsgemäßen Ansatz gelingt, Diagnosemeldungen und somit anzuzeigen, die Information in besonders effektiver Art und Weise an äußere Gegebenheiten anzupassen. Der erfindungsgemäße Ansatz bewirkt zudem, eine besonders übersichtliche Informationsdarstellung an einer Anzeigeeinheit. Darüber hinaus trägt er zu einer Zeit - und somit Kostenersparnis bei.

Wie die vorstehenden Ausführungen zeigen, kann dadurch, dass Diagnosemeldungen in Abhängigkeit einer erfassten Zugriffsberechtigung ermittelt werden, eine besonders effektive Anpassung der Diagnosemeldungen an eine äußere Gegebenheit erreicht werden. Diese Anpassung kann durch zusätzliche Berücksichtigung des festgestellten Betriebszustandes bei der Ermittlung der Diagnosemeldungen weiter gesteigert werden.

In der Diagnoseauswahleinheit sind eine Vielzahl von untereinander unterschiedlichen Diagnosemeldungen hinterlegt, wobei jede dieser Diagnosemeldungen den festgestellten Betriebszustand repräsentiert, wobei die Diagnoseauswahleinheit eine dieser Diagnosemeldungen in Abhängigkeit der ausgewählten Sonderbetriebsart und der erfassten Zugriffsberechtigung auswählt.

Diese Maßnahme stellt sicher, dass für einen festgestellten Betriebszustand, und zwar unabhängig davon, ob es sich um einen Prozesszustand der zu steuernden Anlage oder um einen Systemzustand der Sicherheitssteuerung handelt, sämtliche erforderlichen Diagnosemeldungen hinterlegt sind, und somit für eine optimale Anpassung der durch die Diagnosemeldung darzustellenden Information an die ausgewählte Sonderbetriebsart und/oder an die erfasste Zugriffsberechtigung zur Verfügung stehen. Somit ist eine optimale Anpassung der darzustellenden Information an eine äußere Gegebenheit möglich.

Die erfasste Zugriffsberechtigung ist eine aus einer Vielzahl von definierten, untereinander unterschiedlichen Zugriffsberechtigungen, wobei die Vielzahl von untereinander unterschiedlichen Diagnosemeldungen für jeden der untereinander unterschiedlichen Sonderbetriebszustände und für jede untereinander unterschiedlichen Zugriffsberechtigungen eine jeweils zugeordnete Diagnosemeldung enthält.

Durch diese Maßnahme ist sichergestellt, dass nicht nur für jeder der möglichen Sonderbetriebsarten, sondern auch für jede der möglichen Zugriffsberechtigungen die jeweils optimalen Diagnosemeldungen hinterlegt und somit in Abhängigkeit der ausgewählten Sonderbetriebsart und der erfassten Zugriffsberechtigung auswählbar und somit ermittelbar sind.

In einer Ausgestaltung der Erfindung sind für jeden der mehreren Betriebszustände eine Vielzahl von untereinander unterschiedlichen Diagnosemeldungen hinterlegt.

Diese Maßnahme besitzt den Vorteil, dass für jeden der mehreren Betriebszustände die jeweils mit Blick auf die ausgewählte Sonderbetriebsart und/oder die erfasste Zugriffsberechtigung optimale Diagnosemeldung ermittelt werden kann. Somit ist eine besonders effektive Anpassung an äußere Gegebenheiten möglich.

In einer weiteren Ausgestaltung der Erfindung bilden die Erfassungseinheit und die Anzeigeeinheit eine bauliche Einheit.

Aufgrund dieser Maßnahme kann eine die Anzeigeeinheit ablesende Person in einfacher Art und Weise die mittels der Anzeigeeinheit angezeigte Diagnosemeldung an die ihr zugeordnete Zugriffsberechtigung anpassen. Der besondere Vorteil liegt darin, dass diese Anpassung direkt beim Lesen möglich ist.

In einer weiteren Ausgestaltung der Erfindung ist die Erfassungseinheit dazu ausgebildet, die Zugriffsberechtigung durch Wechselwirkung mit einer mobilen Zugriffsberechtigungseinheit zu erfassen.

Vorteilhafterweise repräsentiert dabei die Zugriffsberechtigungseinheit diejenige Zugriffsberechtigung, die in einer Vielzahl von vorgegebenen, untereinander unterschiedlichen Zugriffsberechtigungen enthalten ist, und die der Person, die mit der Sicherheitssteuerung interagiert, zugeordnet ist. Diese Maßnahme ermöglicht eine besonders flexible Handhabe in der Erfassung einer Zugriffsberechtigung. Dadurch, dass die Zugriffsberechtigungseinheit, die die Zugriffsberechtigung repräsentiert, mobil ausgebildet ist, kann die Zugriffsberechtigung an unterschiedlichen Orten erfasst werden. Sind in der zu steuernden Anlage mehrere Anzeigeeinheiten vorhanden, so kann durch eine jede dieser Anzeigeeinheiten die Zugriffsberechtigung erfasst werden, sofern jede dieser Anzeigeeinheiten eine Erfassungseinheit aufweist. Darüber hinaus hat die mobile Ausgestaltung der Zugriffsberechtigungseinheit den Vorteil, dass einzelnen Personen explizit eine Zugriffsberechtigung zugewiesen werden kann.

In einer weiteren Ausgestaltung der zuvor genannten Maßnahme weist die Zugriffsberechtigungseinheit einen mechanischen Schlüssel auf, der in eine in der Erfassungseinheit angeordnete Schlüsselaufnahme eingebracht werden kann.

Vorteilhafterweise ist die Schlüsselaufnahme dazu ausgebildet, durch Drehen des mechanischen Schlüssels in eine Vielzahl von Positionen gebracht zu werden, wobei jede dieser Positionen eine Zugriffsberechtigung repräsentiert, die in der Vielzahl von vorgegebenen, untereinander unterschiedlichen Zugriffsberechtigungen enthalten ist, wobei die Position, die die Schlüsselaufnahme nach Drehen des mechanischen Schlüssels einnimmt, von der Ausformung des mechanischen Schlüssels abhängt. Diese Maßnahme hat folgenden Vorteil: Auf dem Gebiet der Sicherheitssteuerung hat sich bisher der Einsatz mechanischer Schlüssel und entsprechender Schlüsselaufnahmen hinsichtlich der Festlegung einer Sonderbetriebsart, in der eine zu steuernde Anlage betrieben werden soll, bewährt. Demzufolge werden Betriebsartenwahlschalter, bei denen ein mechanischer Schlüssel zum Einsatz kommt, in entsprechend hoher Stückzahl eingesetzt und sind somit kostengünstig. Folglich ermöglicht diese Maßnahme eine kostengünstige Erfassung der Zugriffsberechtigung.

In einer weiteren Ausgestaltung der beiden zuvor genannten Maßnahmen weist die Zugriffsberechtigungseinheit einen Transponder auf, wobei der Transponder Zugriffsberechtigungsdaten enthält, die die Zugriffsberechtigung repräsentieren.

Bei dieser Ausgestaltung ist die Erfassungseinheit als Sensor zum Auslesen des Transponders ausgebildet und die Zugriffsberechtigungsdaten repräsentieren die Zugriffsberechtigung, die der Person, die mit der Sicherheitssteuerung interagiert, zugeordnet ist. Gegenüber einem mechanischen Schlüssel hat der Einsatz eines Transponders den Vorteil, dass wesentlich mehr Zugriffsberechtigungen unterschieden werden können, da sich auf elektronischem Weg wesentlich mehr unterschiedliche Codes generieren lassen, als dies mit einem mechanischen Betriebsartenwahlschalter möglich ist. Somit kann durch den Einsatz eines Transponders eine besonders effektive Anpassung der zu vermittelnden Information an eine äußere Gegebenheit erreicht werden. Bei dem Einsatz eines Transponders sind zwei alternative Ausgestaltungen denkbar: Bei einer ersten Ausgestaltung ist der Transponder in den mechanischen Schlüssel eingesetzt. Bei einer zweiten Ausgestaltung wird zur Festlegung der Zugriffsberechtigung kein mechanischer Schlüssel, sondern allein ein Transponder verwendet.

In einer weiteren Ausgestaltung der Erfindung weist die Erfassungseinheit eine Anzahl von Eingabeelementen auf, über die die Zugriffsberechtigung eingegeben werden kann. Die Anzahl von Eingabeelementen kann als alphanumerisches Eingabefeld ausgestaltet sein. Die mit der Sicherheitssteuerung interagierende Person gibt dann einen nur ihr bekannten Code über das alphanumerische Eingabefeld ein und durch Auswertung dieses Codes kann die dieser Person zugeordnete Zugriffsberechtigung erfasst werden. Da alphanumerische Eingabefelder nicht sehr teuer sind, handelt es sich hierbei um eine kostengünstige Variante, die Zugriffsberechtigung zu erfassen.

In einer weiteren Ausgestaltung der Erfindung ist die Betriebsartenwahleinheit dazu ausgebildet, die Sonderbetriebsart durch Wechselwirkung mit einer mobilen Sonderbetriebsarteneinheit auszuwählen.

Vorteilhafterweise repräsentiert dabei die Sonderbetriebsarteneinheit die auszuwählende Sonderbetriebsart. Diese Maßnahme ermöglicht eine besonders flexible Handhabe in der Auswahl einer Sonderbetriebsart. Dadurch, dass die Sonderbetriebsarteneinheit mobil ausgebildet ist, kann die Sonderbetriebsart an unterschiedlichen Orten ausgewählt werden.

Von besonderem Vorteil ist es, dass für die Erfassung der Zugriffsberechtigung eine Erfassungseinheit vorgesehen ist und für die Auswahl der Sonderbetriebsärt eine eigenständige Betriebsartenwahleinheit vorgesehen ist. Dadurch, dass es sich hierbei um zwei eigenständige und somit getrennte Einheiten handelt, kann die Zugriffsberechtigung unabhängig von der ausgewählten Sonderbetriebsart erfasst werden. Somit kann gleichzeitig eine Sonderbetriebsart ausgewählt sein und eine Zugriffsberechtigung erfasst werden, die nicht zwangsläufig miteinander korrelieren. Somit können die Diagnosemeldung und die zu vermittelnde Information besonders gut an eine äußere Gegebenheit angepasst werden.

In einer weiteren Ausgestaltung der zuvor genannten Maßnahme weist die Sonderbetriebsarteneinheit einen Transponder auf, der Sonderbetriebsdaten enthält, die eine definierte Sonderbetriebsart repräsentieren.

Bei dieser Ausgestaltung ist die Betriebsartenwahleinheit als Sensor zum Auslesen des Transponders ausgebildet und die Sonderbetriebsartdaten repräsentieren die Sonderbetriebsart, die ausgewählt werden soll..

In einer weiteren Ausgestaltung der Erfindung weist das Anwenderprogramm zumindest ein Sicherheitssteuerungsmodul auf, in dem sicherheitsrelevante Steuerungseingangssignale fehlersicher verarbeitet werden, und zumindest ein Standardsteuerungsmodul auf, in dem überwiegend prozessrelevante Steuerungseingangssignale verarbeitet werden.

Bei dieser Ausgestaltung umfasst die Vielzahl von Sensoren vorteilhafterweise eine erste Anzahl von Sensoren, die zur Erfassung sicherheitsrelevanter Größen ausgebildet sind, wobei diese sicherheitsrelevanten Größen mittels sicherheitsrelevanter Steuerungseingangssignale dem Sicherheitssteuerungsmodul zugeführt werden, und eine zweite Anzahl von Sensoren, die zur Erfassung von prozessrelevanten Größen ausgebildet sind, wobei diese prozessrelevanten Größen mittels prozessrelevanter Steuerungseingangssignale dem Standardsteuerungsmodul zugeführt werden. Des weiteren ist in dieser Ausgestaltung vorteilhafterweise vorgesehen, dass die Vielzahl von Steuerungsausgangssignalen eine erste Anzahl von Steuerungsausgangssignalen umfasst, die in dem Sicherheitssteuerungsmodul ermittelt werden, und die für die Ansteuerung einer ersten Anzahl von Aktoren bestimmt sind, die zur Durchführung sicherheitsrelevanter Aktionen ausgebildet sind, und eine zweite Anzahl von Steuerungsausgangssignalen umfasst, die in dem Standardsteuerungsmodul ermittelt werden, und die für die Ansteuerung einer zweiten Anzahl von Aktoren bestimmt sind, die für die Durchführung prozessrelevanter Aktionen ausgebildet sind. Dieser Aufbau des Anwenderprogramms gemäß dem das Anwenderprogramm zumindest ein Sicherheitssteuerungsmodul und zumindest eine Standardsteuerungsmodul umfasst, ermöglicht, das mit ein und demselben Anwenderprogramm sowohl Steuerungsaufgaben, die dem Sicherheitsteuerungsaspekt zugeordnet sind, als auch Steuerungsaufgaben, die dem Standardsteuerungsaspekt zugeordnet sind, bearbeitet werden können. Somit können mit einer gemäß diesem Aspekt ausgestalteten Sicherheitssteuerung sowohl Steuerungsaufgaben, die dem Sicherheitssteuerungsaspekt zugeordnet sind, als auch Steuerungsaufgaben, die dem Standardsteuerungsaspekt zugeordnet sind, realisiert werden. Dies hat den Vorteil, dass für eine umfassende Steuerung einer Anlage, d.h. für eine Steuerung, die sowohl den Sicherheitssteuerungsaspekt als auch den Standardsteuerungsaspekt umfasst, lediglich ein Steuergerät erforderlich ist, und nicht zwei Steuergeräte, von denen eines die Steuerungsaufgaben bearbeitet, die dem Sicherheitssteuerungsaspekt zugeordnet sind, und eines die Steuerungsaufgaben bearbeitet, die dem Standardsteuerungsaspekt zugeordnet sind. Somit reduziert sich auch der für die Verdrahtung erforderliche Aufwand. Insgesamt stellt diese Maßnahme eine kostengünstige Möglichkeit dar, eine umfassende Steuerung für eine Anlage zu realisieren. An dieser Stelle sei darauf hingewiesen, dass mit der Formulierung, dass in dem Standardsteuerungsmodul überwiegend prozessrelevante Steuerungseingangssignale verarbeitet werden, gemeint ist, dass in dem Standardsteuerungsmodul auch sicherheitsrelevante Steuerungseingangssignale verarbeitet werden können.

In einer weiteren Ausgestaltung der Erfindung repräsentiert der Systemzustand einen gestörten Aktor und/oder Sensor.

Gerade bei Diagnosemeldungen, die einen gestörten Aktor und/oder Sensor repräsentieren, ist es von Vorteil, die zu vermittelnde Information an die Rolle desjenigen anzupassen, der die Information liest. So ist es beispielsweise für einen Bediener einer Anlage ausreichend, darüber informiert zu werden, dass ein gestörter Aktor oder ein gestörter Sensor vorliegt. Dahingegen ist es sinnvoll, einem Instandhalter zusätzliche Informationen anzuzeigen. Hierbei kann es sich beispielsweise um eine Information darüber handeln, welcher Aktor oder welcher Sensor gestört ist. Mit Hilfe solche einer bauteilspezifischen Information ist es dem Instandhalter möglich, einen raschen Austausch des defekten Bauteils vornehmen zu können. Bei einem gestörten Aktor oder gestörten Sensor soll es sich um einen Aktor oder Sensor handeln, der defekt ist oder aus einem anderen Grund nicht eindeutig auswertbar ist. An dieser Stelle sei ausgeführt, was unter einem Sensor zu verstehen ist: Bei einem Sensor kann es sich ausschließlich um eine Erfassungseinheit handeln, mit der eine physikalische Größe erfasst werden kann. Ein Sensor kann aber auch als Kombination aus solch einer Erfassungseinheit und einer Signalverarbeitungseinheit aufgebaut sein, wobei die Signalverarbeitungseinheit dazu ausgebildet ist, verschiedene Signalaufbereitungsmaßnahmen durchzuführen, beispielsweise eine Analog/Digital-Wandlung oder eine Signalverstärkung.

In einer weiteren Ausgestaltung der zuvor genannten Maßnahme ist die Diagnoseauswahleinheit dazu ausgebildet, die Diagnosemeldung zusätzlich in Abhängigkeit einer Ortsangabe zu ermitteln, wobei die Ortsangabe den Einbauort des Aktors und/oder des Sensors innerhalb der Anlage repräsentiert.

Gerade bei einer Ortsangabe ist es von besonderem Vorteil, diese in Abhängigkeit von der Rolle der eine Anzeigeeinheit ablesenden Person in eine Diagnosemeldung aufzunehmen oder unberücksichtigt zu lassen. So ist es für einen Bediener einer Anlage unerheblich, wo sich ein defekter Sensor oder ein defekter Aktor befindet, da er mangels Zugriffsberechtigung einen Austausch nicht vornehmen kann. Folglich kann im Falle eines Bedieners eine Ortsangabe in einer Diagnosemeldung entfallen. Das Weglassen der Ortsangabe führt zu einer gesteigerten Übersichtlichkeit der mittels einer Anzeigeeinheit angezeigten Information. Dahingegen ist für einen Instandhalter eine Ortsangabe eine nützliche Information, da es ihm dadurch möglich ist, einen defekten Sensor oder einen defekten Aktor rasch auszutauschen. Folglich sollte für einen Instandhalter eine Ortsangabe in einer Diagnosemeldung enthalten sein.

In einer weiteren Ausgestaltung der Erfindung wird das Anwenderprogramm durch Bereitstellen einer Vielzahl von Softwarekomponenten erstellt, wobei die Vielzahl der Softwarekomponenten einer Vielzahl von der zu steuernden automatisierten Anlage enthaltenen Vielzahl von Anlagenhardwarekomponenten entsprechen.

Aufgrund dieser Maßnahme ist es möglich, ein Anwenderprogramm in besonders einfacher und übersichtlicher Art und Weise zu erstellen. Dies trägt zu einer höheren Fehlersicherheit der Programmierung einer Sicherheitssteuerung bei.

Bei der Anpassung der Diagnosemeldung an die eine Anzeigeeinheit ablesende Person gilt es nun festzulegen, welcher dieser viel Informationsanteile in der Diagnosemeldung überhaupt enthalten sein soll und wie detailliert der einzelne Informationsanteil ausgeführt sein soll. Beides kann durch Auswertung der Zugriffsberechtigung, die der Person zugeordnet ist, festgelegt werden. Für einen Bediener reicht es aus, wenn dieser eine Information darüber erhält, was für eine Störung vorliegt, und wer diese beheben kann. D.h. eine für einen Bediener bestimmte Diagnosemeldung enthält einen "was"-Anteil und einen "wer"-Anteil. Für einen Instandhalter, einen Ersteller eines Anwenderprogramms und einen Hersteller der Sicherheitssteuerung ist neben der Information was wo passiert ist zusätzlich die Information, wie die Störung oder der Fehler behoben werden kann, von Bedeutung. Folglich enthält eine für diese Person bestimmte Diagnosemeldung neben einem "was"-Anteil und einem "wo"-Anteil zusätzlich auch einen "wie"-Anteil. Dabei wird der Detailliertheitsgrad des "wie"-Anteils an die durch die Zugriffsberechtigung festgelegten Möglichkeiten, Eingriffe an der Anlage und/oder an der Sicherheitssteuerung vornehmen zu können, angepasst. Diese Anpassung gilt auch für den "was"-Anteil und den "wo"-Anteil. So kann beispielsweise dem Hersteller der Sicherheitssteuerung konkret angezeigt werden, welche in der Steuerungseinrichtung als solche enthaltene Logikkomponente defekt ist bzw. welches Modul des in der Sicherheitssteuerung hinterlegten Betriebssystems fehlerhaft ist. Wohingegen es ausreicht, dem Ersteller eines Anwenderprogramms lediglich anzuzeigen, dass ein Fehler in der Sicherheitssteuerung vorliegt. Die Berücksichtigung der erfassten Zugriffsberechtigung ermöglicht hinsichtlich eines festgestellten Systemzustandes eine besonders effektive Anpassung einer Diagnosemeldung an die eine Anzeigeeinheit ablesende Person. Wohingegen hinsichtlich eines festgestellten Prozesszustandes die Berücksichtigung einer ausgewählten Sonderbetriebsart eine besonders effektive Anpassung einer Diagnosemeldung an die eine Anzeigeeinheit ablesende Person ermöglicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine schematische Darstellung einer erfindungsgemäßen Sicherheitssteuerung in Verbindung mit einer zu steuernden Anlage, und

Fig. 2 in einer schematischen Darstellung eine in der Sicherheitssteuerung enthaltene Diagnoseauswahleinheit.

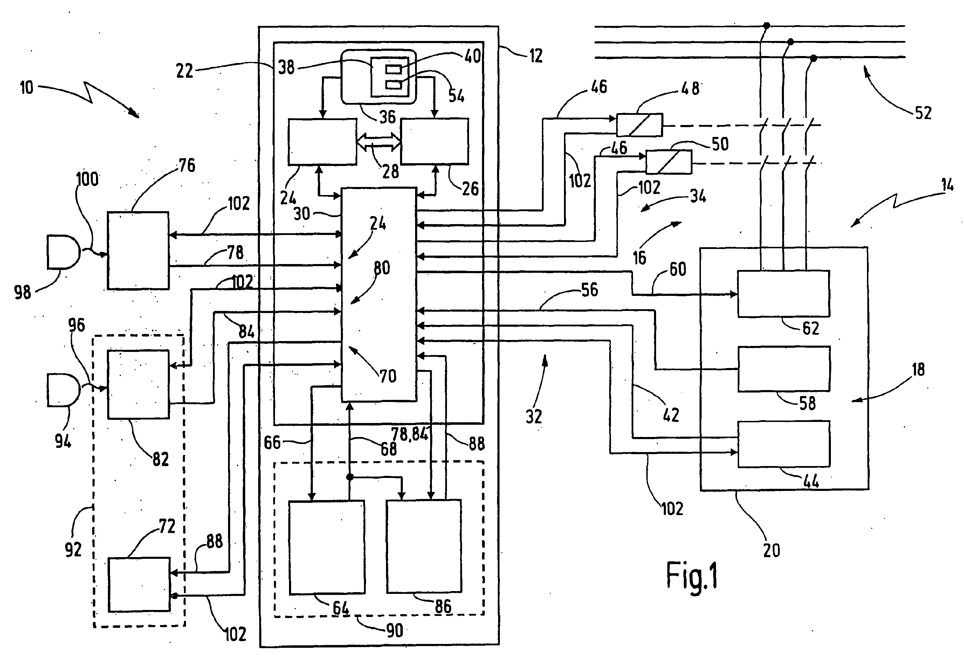

In Fig. 1 ist eine in ihrer Gesamtheit mit der Bezugsziffer 10 bezeichnete Sicherheitsschaltung dargestellt, die eine Sicherheitssteuerung 12 aufweist, die dazu ausgebildet ist, eine in ihrer Gesamtheit mit der Bezugsziffer 14 bezeichnete Anlage zu steuern. Die Anlage 14 umfasst eine Vielzahl 16 von Aktoren und eine Vielzahl 18 von Sensoren. Exemplarisch ist ein in der Anlage 14 enthaltener Verbraucher 20 dargestellt, bei dem es sich beispielsweise um einen Roboter handeln kann.

Die Sicherheitssteuerung 12 umfasst eine Steuereinheit 22. Die Steuereinheit 22 ist zweikanalig-redundant aufgebaut, um die erforderliche Fehlersicherheit zum Steuern sicherheitskritischer Prozesse zu erreichen. Stellvertretend für den zweikanaligen Aufbau sind in Fig. 1 zwei voneinander getrennte Prozessoren 24, 26 dargestellt, die über eine bidirektionale Kommunikationsschnittstelle 28 miteinander in Verbindung stehen, um sich gegenseitig kontrollieren und Daten austauschen zu können. Bevorzugt sind die beiden Kanäle der Steuereinheit 22 und die beiden Prozessoren 24, 26 diversitär, d.h. verschieden voneinander aufgebaut, um systematische Fehler weitgehend auszuschließen.

Mit der Bezugsziffer 30 ist eine Ein-/Ausgabeeinheit bezeichnet, die mit jedem der beiden Prozessoren 24, 26 in Verbindung steht. Die Ein-/Ausgabeeinheit 30 nimmt eine Vielzahl 32 von Steuerungseingangssignalen von der Vielzahl 18 von Sensoren auf und leitet diese in einem angepassten Datenformat an jeden der beiden Prozessoren 24, 26 weiter. Ferner erzeugt die Ein-/Ausgabeeinheit in Abhängigkeit von den Prozessoren 24, 26 eine Vielzahl 34 von Steuerungsausgangssignalen, mit denen die Vielzahl 16 von Aktoren angesteuert werden.

Mit der Bezugsziffer 36 ist eine Chipkarte bezeichnet, auf der ein Anwenderprogramm 38 abgespeichert wird. Das Anwenderprogramm 38 wird mit Hilfe eines Programmiertools erstellt. Bei dem Programmiertool handelt es sich beispielsweise um ein Computerprogramm, welches auf einem herkömmlichen PC ausgeführt werden kann. Die Verwendung einer Chipkarte 36 als Speichermedium ermöglicht dabei einen einfachen Austausch des Anwenderprogramms 38 auch ohne direkten Anschluss an den PC, auf dem das Programmiertool ausgeführt wird. Alternativ hierzu kann das Anwenderprogramm 38 auch in einem fest in der Steuereinheit 22 eingebauten Speicher, beispielsweise einem EEPRUM, abgespeichert sein.

Das Anwenderprogramm 38 legt die von der Sicherheitssteuerung 12 durchzuführenden Steuerungsaufgaben fest. Hierzu enthält das Anwenderprogramm 38 ein Sicherheitssteuerungsmodul 40, in dem diejenigen Steuerungsaufgaben durchgeführt werden, die dem Sicherheitssteuerungsaspekt zugeordnet sind. In dem Sicherheitssteuerungsmodul 40 werden sicherheitsrelevante Steuerungseingangssignale 42, die von dem Sicherheitssteuerungsaspekt zugeordneten Sicherheitssensoren 44 erzeugt werden, fehlersicher verarbeitet. Bei den Sicherheitssensoren 44 handelt es sich beispielsweise um Not-Aus-Taster, Zwei-Hand-Steuerungen, Schutztüren, Drehzahlüberwachungsgeräte oder andere Sensoren zur Aufnahme sicherheitsrelevanter Parameter. Gemäß den im Sicherheitssteuerungsaspekt zugeordneten Steuerungsaufgaben werden in Abhängigkeit der sicherheitsrelevanten Steuerungseingangssignale 42 sicherheitsrelevante Steuerungsausgangssignale 46 erzeugt, mit denen Sicherheitsaktoren 48, 50, den Sicherheitssteuerungsaspekt zugeordnete Aktoren, angesteuert werden. Bei den Sicherheitsaktoren 48, 50 handelt es sich beispielsweise um sogenannte Schütze, deren Arbeitskontakte in der Verbindung zwischen einer Stromversorgung 52 und dem Verbraucher 20 angeordnet sind. Über die Sicherheitsaktoren 48, 50 kann die Stromversorgung des Verbrauchers 20 abgeschaltet werden, wodurch es möglich ist, bei Auftritt einer entsprechenden Fehlfunktion zumindest den Verbraucher 20 in einen sicheren Zustand zu überführen.

Darüber hinaus weist das Anwenderprogramm 38 ein Standardsteuerungsmodul 54 auf, mit dem diejenigen Steuerungsaufgaben durchgeführt werden, die dem Standardsteuerungsaspekt zugeordnet sind. Hierzu werden in dem Standardsteuerungsmodul 54 prozessrelevante Steuerungseingangssignale 56 verarbeitet, die von Standardsensoren 58 erzeugt werden. Bei den Standardsensoren 58 handelt es sich um solche Sensoren, die beispielsweise für eine Antriebsregelung benötigte Eingangsgrößen erfassen. Hierbei kann es sich beispielsweise um Drehzahlen, wie Winkel oder Geschwindigkeiten handeln. In Abhängigkeit der prozessrelevanten Steuerungseingangssignale 56 werden gemäß den dem Standardsteuerungsaspekt zugeordneten Steuerungsaufgaben prozessrelevante Steuerungsausgangssignale 60 erzeugt, die Standardaktoren 62 zugeführt werden. Bei den Standardaktoren 62 kann es sich beispielsweise um Motoren oder Stellzylinder handeln.

Der im Ausführungsbeispiel gewählte Aufbau des Anwenderprogramms 38, gemäß dem dieses ein Sicherheitssteuerungsmodul 40 und ein Standardsteuerungsmodul 54 enthält, weswegen von der Steuereinheit 22 sowohl Steuerungsaufgaben, die dem Sicherheitssteuerungsaspekt zugeordnet sind als auch Steuerungsaufgaben, die dem Standardsteuerungsaspekt zugeordnet sind, durchgeführt werden, soll keine einschränkende Wirkung haben. Selbstverständlich ist es auch denkbar, dass die Steuereinheit 22 lediglich Steuerungsaufgabe durchführt, die dem Sicherheitssteuerungsaspekt zugeordnet sind. In diesem Fall enthält das Anwenderprogramm 38 kein Standardsteuerungsmodul 54.

Die Ein-/Ausgabeeinheit 30 dient auch der Anbindung weiterer in der Sicherheitssteuerung 12 enthaltener Komponenten an die beiden Prozessoren 24, 26. So werden einer Diagnoseauswerteeinheit 64 ausgehend von der Ein-/Ausgabeeinheit 30 eine Anzahl 66 von Diagnoseeingangssignalen zugeführt. Die Diagnoseauswerteeinheit 64 ist dazu ausgebildet, in Abhängigkeit von der Anzahl 66 von Diagnoseeingangssignalen festzustellen, welchen von mehreren Betriebszuständen zu einem definierten Zeitpunkt vorliegt. Die mehreren Betriebszustände beinhalten dabei zumindest einen Prozesszustand der zu steuernden Anlage 14 und zumindest einen Systemzustand der Sicherheitssteuerung 12. Der Systemzustand soll dabei nicht nur die in der Sicherheitssteuerung 12 enthaltenen Einheiten und Komponenten erfassen, sondern auch sämtliche mit der Sicherheitssteuerung 12 elektrisch verbundenen Einheiten. Hierbei handelt es sich um die Sicherheitssensoren 44, die Sicherheitsaktoren 48, 50, die Standardsensoren 58, die Standardaktoren 62 sowie eine noch zu beschreibende Anzeigeeinheit und noch zu beschreibende Meldegeräte. Ebenfalls soll der Systemzustand sämtliche zwischen der Sicherheitssteuerung 12 und den vorstehend aufgezählten Einheiten vorhandenen Verdrahtungen umfassen.

Die Diagnoseauswerteeinheit 64 erzeugt ein Betriebszustandssignal 68, welches einen festgestellten Betriebszustand repräsentiert. Das Betriebszustandssignal 68 wird der Ein-/Ausgabeeinheit 30 zugeführt. Somit kann die Steuereinheit 22 dem festgestellten Betriebszustand entsprechend geeignete Maßnahmen ergreifen. Die Sicherheitssteuerung 12 umfasst eine Schnittstelle 70 für eine Anzeigeeinheit 72. Die Anzeigeeinheit 72 ist dazu ausgebildet, Diagnosemeldungen anzuzeigen.

Ferner umfasst die Sicherheitssteuerung 12 eine Schnittstelle 74 für eine Betriebsartenwahleinheit 76. Die Betriebsartenwahleinheit 76 ist dazu ausgebildet, eine von mehreren untereinander unterschiedlichen Sonderbetriebsarten auszuwählen, wobei sich die Sonderbetriebsarten jeweils von dem Automatikbetrieb unterscheiden. Die Betriebsartenwahleinheit 76 stellt ein Sonderbetriebsartensignal 78 bereit, welches die ausgewählte Sonderbetriebsart repräsentiert. Das Sonderbetriebsartensignal 78 wird der Steuereinheit 22 zugeführt, um die Anlage 14 in der ausgewählten Sonderbetriebsart zu betreiben.

Ferner weist die Sicherheitssteuerung 12 eine Schnittstelle 80 für eine Erfassungseinheit 82 auf. Die Erfassungseinheit ist dazu ausgebildet, eine Zugriffsberechtigung zu erfassen, die einer mit der Sicherheitssteuerung 12 interagierenden Person, insbesondere einer die Anzeigeeinheit 72 ablesenden Person, zugeordnet ist. Die Erfassungseinheit 82 stellt ein Zugriffsberechtigungssignal 84 bereit, welches die erfasste Zugriffsberechtigung repräsentiert.

Darüber hinaus weist die Sicherheitssteuerung 12 eine Diagnoseauswahleinheit 86 auf. Der Diagnoseauswahleinheit 86 wird das Betriebszustandsignal 68 zugeführt. Zusätzlich wird der Diagnoseauswahleinheit 86 das Sonderbetriebsartensignal 78 und/oder das Zugriffsberechtigungssignal 84 über die Ein-/Ausgabeeinheit 30 zugeführt. In Abhängigkeit des festgestellten Betriebszustands und in Abhängigkeit der ausgewählten Sonderbetriebsart und/oder der erfassten Zugriffsberechtigung ermittelt die Diagnoseauswahleinheit 86 eine den festgestellten Betriebszustand repräsentierende Diagnosemeldung. Die Diagnoseauswahleinheit 86 erzeugt ein die Diagnosemeldung repräsentierendes Diagnosesignal 88, welches der Anzeigeeinheit 72 über die Ein-/Ausgabeeinheit 30 zum Anzeigen der Diagnosemeldung zugeführt wird. Die Diagnoseauswerteeinheit 64 und die Diagnoseauswahleinheit 86 können zu einer Diagnoseeinheit 90 zusammengefasst sein, was durch die strichlinierte Darstellung angedeutet ist.

Die Anzeigeeinheit 72 und die Erfassungseinheit 82 können zu einer baulichen Einheit 92 zusammengefasst sein, was durch die strichlinierte Darstellung angedeutet ist. Vorteilhafterweise bietet es sich an, die Erfassungseinheit 82 in die Anzeigeeinheit 72 zu integrieren.

Die Erfassungseinheit 82 ist dazu ausgebildet, die Zugriffsberechtigung durch Wechselwirkung mit einer mobilen Zugriffsberechtigungseinheit 94 zu erfassen, was durch einen Pfeil 96 angedeutet ist. Für die Erfassungseinheit 82 und somit auch für die mobile Zugriffsberechtigungseinheit 94 sind verschiedene Ausgestaltungen denkbar. In einer ersten Ausgestaltung ist die mobile Zugriffsberechtigungseinheit 94 als mechanischer Schlüssel ausgeführt, der in eine Schlüsselaufnahme, die in der Erfassungseinheit 82 angeordnet ist, eingebracht werden kann. Diese erste Ausgestaltung entspricht einem mechanisch ausgeführten Betriebsartenwahlschalter. In einer zweiten Ausgestaltung kann die mobile Zugriffsberechtigungseinheit 94 als Transponder ausgeführt sein, dessen Daten von der als Lesegerät ausgeführten Erfassungseinheit 82 ausgelesen werden können. Der Transponder enthält Zugriffsberechtigungsdaten, die die Zugriffsberechtigung repräsentieren. Es ist eine dritte Ausgestaltung denkbar, die eine Kombination der ersten Ausgestaltung und der zweiten Ausgestaltung darstellt. D.h. der mechanische Schlüssel enthält einen Transponder und die Erfassungseinheit 82 enthält im Bereich der Schlüsselaufnahme ein Lesegerät für den Transponder. Ferner ist eine vierte Ausgestaltung denkbar, in der die Erfassungseinheit 82 eine Anzahl von Eingabeelementen aufweist, über die die Zugriffsberechtigung eingegeben werden kann. Hierbei ist die Erfassungseinheit 82 beispielsweise als alphanumerische Eingabeeinheit ausgeführt. In dieser Ausgestaltung ist eine mobile Zugriffsberechtigungseinheit 94 nicht erforderlich. Die Aufzählungsreihenfolge der einzelnen Ausgestaltungen soll keine Wertung hinsichtlich deren Einsatzmöglichkeiten darstellen.

Die Betriebsartenwahleinheit 76 ist dazu ausgebildet, die Sonderbetriebsart durch Wechselwirkung mit einer mobilen Sonderbetriebsarteneinheit 98 auszuwählen, was durch eine Pfeil 100 dargestellt ist. Die mobile Sonderbetriebsarteneinheit 98 kann als Transponder ausgebildet sein, der Sonderbetriebsartdaten enthält, die eine definierte Sonderbetriebsart repräsentieren. In diesem Fall ist die Betriebsartenwahleinheit 76 als Lesegerät ausgebildet, mit dem die Sonderbetriebsartdaten von dem Transponder ausgelesen werden können.

Die Betriebsartenwahleinheit 76 und die Erfassungseinheit 82 werden üblicherweise als Meldegeräte bezeichnet.

Über die Ein-/Ausgabeeinheit 30 werden zwischen der Sicherheitssteuerung 12 und den Sicherheitssensoren 44, den Sicherheitsaktoren 48, 50, der Anzeigeeinheit 72, der Betriebsartenwahleinheit 76 und der Erfassungseinheit 82 Testsignale 102 ausgetauscht. Mit Hilfe der Testsignale 102 kann in der Sicherheitssteuerung 12 festgestellt werden, ob die an sie angeschlossenen Einheiten und Komponenten fehlerfrei arbeiten, was erforderlich ist, da ein sicherer Zustand der zu steuernden Anlage 14 gewährleistet sein muss, sobald an einem mit der Sicherheitssteuerung 12 verbundenen Gerät eine Fehlfunktion auftritt.

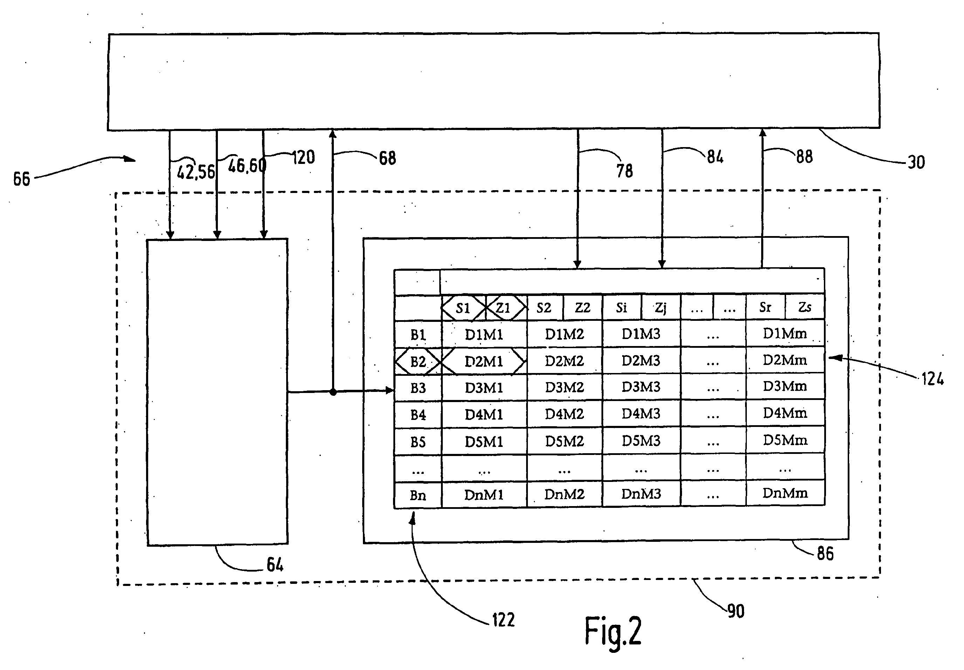

Anhand der Darstellung in Fig. 2 wird die Arbeitsweise der Diagnoseauswerteeinheit 64 und vor allem die Arbeitsweise der Diagnoseauswahleinheit 86 erklärt.

Ausgehend von der Ein-/Ausgabeeinheit 30 werden der Diagnoseauswerteeinheit 64 eine Anzahl 66 von Diagnoseeingangssignalen zugeführt. Hierbei kann es sich um folgende Signale handeln: Die sicherheitsrelevanten Steuerungseingangssignale 42 und die prozessrelevanten Steuerungseingangssignale 56; die sicherheitsrelevanten Steuerungsausgangssignale 46 und die prozessrelevanten Steuerungsausgangssignale 60 sowie weitere Signale 120. In den weiteren Signalen 120 können die Testsignale 102, das Zugriffsberechtigungssignal 84, das Sonderbetriebsartensignal 78 sowie in der Steuereinheit 22 ermittelte und in dieser verarbeitete Signale enthalten sein.

In Abhängigkeit der insgesamt zugeführten Signale stellt die Diagnoseauswerteeinheit 64 fest, welcher von mehreren Betriebszuständen 122 zu einem definierten Zeitpunkt vorliegt. Dies erfolgt durch entsprechende Auswertung der zugeführten Signale. Bei dem festgestellten Betriebszustand kann es sich um eine Prozesszustand der zu steuernden Anlage 14 oder um einen Systemzustand der Sicherheitssteuerung 22 handeln. Bei einem Systemzustand kann es sich beispielsweise um einen Kurzschluss gegen Masse oder gegen die Versorgungsspannung handeln, um einen Sensordefekt, um einen Aktordefekt, um einen Leiterbruch, um einen in der Chipkarte 36 auftretenden Fehler, um einen in einem der Prozessoren 24, 26 auftretenden Fehler oder um einen ähnlichen Fehler. Für gewöhnlich wird ein Prozesszustand der zu steuernden Anlage dadurch festgestellt, dass insbesondere die prozessrelevanten Steuerungseingangssignale 56 mit vorgegebenen Schwellenwerten verglichen werden.

Die Diagnoseauswerteeinheit 64 erzeugt ein Betriebszustandssignal 68, welches den festgestellten Betriebszustand repräsentiert. Das Betriebszustandsignal 68 wird sowohl der Ein-/Ausgabeeinheit 30 als auch der Diagnoseauswahleinheit 86 zugeführt. Gemäß der Darstellung in Fig. 2 soll es sich bei dem festgestellten Betriebszustand um den Betriebszustand B2 handeln, was durch die angeschrägten Ecken angedeutet ist. In der Diagnoseauswahleinheit 86 sind für jeden der mehreren Betriebszustände 122 eine Vielzahl von untereinander unterschiedlichen Diagnosemeldungen hinterlegt. Für den festgestellten Betriebszustand B2 ist eine Vielzahl 124 von untereinander unterschiedlichen Diagnosemeldungen hinterlegt. Ausgehend von der Ein-/Ausgabeeinheit 30 werden der Diagnoseauswahleinheit 86 das Sonderbetriebsartensignal 78, welches die ausgewählte Sonderbetriebsart repräsentiert und das Zugriffsberechtigungssignal 84, welches die erfasste Zugriffsberechtigung repräsentiert, zugeführt. Im vorliegenden Fall soll es sich bei der ausgewählten Sonderbetriebsart um die Sonderbetriebsart S1 und bei der erfassten Zugriffsberechtigung um die Zugriffsberechtigung Z1 handeln, was jeweils durch die angeschrägten Ecken angedeutet ist. Demzufolge wählt die Diagnoseauswahleinheit 86 die Diagnosemeldung D2M1 aus der Vielzahl 124 von untereinander unterschiedlichen Diagnosemeldungen aus und erzeugt das Diagnosesignal 88, welches diese Diagnosemeldung repräsentiert und der Ein-/Ausgabeeinheit 30 zur Weiterleitung an die Anzeigeeinheit 72 zugeführt wird.

In der Diagnoseauswahleinheit 86 sind für jeden der mehreren Betriebszustände 122 eine Vielzahl von untereinander unterschiedlichen Diagnosemeldungen hinterlegt. Jeder der Vielzahl von untereinander unterschiedlichen Diagnosemeldungen enthält für jeden der untereinander unterschiedlichen Sonderbetriebszustände S1 bis Sr und/oder für jede der untereinander unterschiedlichen Zugriffsberechtigungen Z1 bis Zs eine jeweils zugeordnete Diagnosemeldung. Insgesamt sind in der Diagnoseauswahleinheit 86 die Diagnosemeldungen D1M1 bis DnMn für die mehreren Betriebszustände 121 B1 bis Bn hinterlegt.

Die dem Ausführungsbeispiel zugrundeliegende Ausgestaltung der Sicherheitssteuerung, gemäß der mit der Sicherheitssteuerung sowohl Steuerungsaufgaben, die dem Sicherheitssteuerungsaspekt als auch Steuerungsaufgaben, die dem Standardsteuerungsaspekt zugeordnet sind, mit ein und derselben Steuereinheit bearbeitet werden, ist für die Umsetzung der Idee der Erfindung nicht zwingend. Für beide Kategorien von Steuerungsaufgaben können auch eigenständige Steuereinheiten eingesetzt werden.

Die Anzeigeeinheit 72 kann in einem in der Anlage 14 enthaltenen Leitstand angeordnet sein. Es kann sich aber auch um eine eigenständige Anzeigeeinheit handeln. Sie kann als LCD-Bildschirm oder als alphanumerisches Textfeld ausgeführt sein.

Als Prozessdiagnosemeldung kann beispielsweise "Behälter leer" lauten. Als Systemdiagnosemeldungen kommen beispielsweise in Betracht " Speicher defekt", Kurzschluss gegen 24V" oder "Hardwarefehler".

## Patentansprüche

1. Sicherheitssteuerung zum Steuern einer automatisierten Anlage (14), die eine Vielzahl (18) von Sensoren und eine Vielzahl (16) von Aktoren umfasst,
mit einer Steuereinheit (22), der eine Vielzahl (32) von Steuerungseingangssignalen von den Sensoren zugeführt sind, wobei die Steuereinheit (22) dazu ausgebildet ist, in einem Automatikbetrieb eine Vielzahl (34) von Steuerungsausgangssignalen in Abhängigkeit von den Steuerungseingangssignalen gemäß einem in ihr ablaufenden Anwenderprogramm (38) zu erzeugen, wobei mit der Vielzahl (34) von Steuerungsausgangssignalen die Vielzahl (16) von Aktoren angesteuert werden,
mit einer Diagnoseauswerteeinheit (64), der eine Anzahl (66) von Diagnoseeingangssignalen zugeführt sind, wobei die Diagnoseauswerteeinheit (64) dazu ausgebildet ist, in Abhängigkeit von der Anzahl (66) von Diagnoseseingangssignalen festzustellen, welcher von mehreren Betriebszuständen (122) zu einem definierten Zeitpunkt vorliegt, wobei die mehreren Betriebszustände (122) zumindest einen Prozesszustand der zu steuernden Anlage (14) und zumindest einen Systemzustand der Sicherheitssteuerung (12) beinhalten, wobei die Diagnoseauswerteeinheit (64) ein Betriebszustandssignal (68) erzeugt, welches einen festgestellten Betriebszustand repräsentiert,
mit einer Anzeigeeinheit (74), die dazu ausgebildet ist, Diagnosemeldungen anzuzeigen,
mit einer Betriebsartenwahleinheit (76), die dazu ausgebildet ist, eine von mehreren untereinander unterschiedlichen Sonderbetriebsarten auszuwählen, wobei sich die Sonderbetriebsarten jeweils von dem Automatikbetrieb unterscheiden, wobei die Betriebsartenwahleinheit (76) ein Sonderbetriebsartensignal (78) bereitstellt, welches die ausgewählte Sonderbetriebsart repräsentiert, wobei dieses Sonderbetriebsartensignal (78) der Steuereinheit (22) zugeführt wird, um die Anlage (14) in der ausgewählten Sonderbetriebsart zu betreiben,
mit einer Erfassungseinheit (82), die dazu ausgebildet ist, eine Zugriffsberechtigung zu erfassen, die einer mit der Sicherheitssteuerung (12) interagierenden Person, insbesondere einer die Anzeigeeinheit (72) ablesenden Person, zugeordnet ist, wobei die Erfassungseinheit (82) ein Zugriffsberechtigungssignal (84) bereitstellt, welches die erfasste Zugriffsberechtigung repräsentiert, und
mit einer Diagnoseauswahleinheit (86), der das Betriebszustandssignal (68) sowie das Sonderbetriebsartensignal (78) und das Zugriffsberechtigungssignal (84) zugeführt sind, wobei die Diagnoseauswahleinheit (86) in Abhängigkeit des festgestellten Betriebszustands und in Abhängigkeit der ausgewählten Sonderbetriebsart und der erfassten Zugriffsberechtigung eine den festgestellten Betriebszustand repräsentierende Diagnosemeldung ermittelt, wobei die Diagnoseauswahleinheit (86) ein die Diagnosemeldung repräsentierendes Diagnosesignal (88) erzeugt, welches der Anzeigeeinheit (72) zum Anzeigen der Diagnosemeldung zugeführt wird,
**dadurch gekennzeichnet, dass** in der Diagnoseauswahleinheit (86) eine Vielzahl (124) von untereinander unterschiedlichen Diagnosemeldungen hinterlegt sind, wobei jede dieser Diagnosemeldungen den festgestellten Betriebszustand repräsentiert, wobei die Diagnoseauswahleinheit (86) eine dieser Diagnosemeldungen in Abhängigkeit der ausgewählten Sonderbetriebsart und der erfassten Zugriffsberechtigung auswählt, wobei die erfasste Zugriffsberechtigung eine aus einer Vielzahl von definierten, untereinander unterschiedlichen Zugriffsberechtigungen ist, wobei die Vielzahl (124) von untereinander unterschiedlichen Diagnosemeldungen für jeden der untereinander unterschiedlichen Sonderbetriebszustände und für jede der untereinander unterschiedlichen Zugriffsberechtigungen eine jeweils zugeordnete Diagnosemeldung enthält.

2. Sicherheitssteuerung nach Anspruch 1, **dadurch gekennzeichnet, dass** für jeden der mehreren Betriebszustände (122) eine Vielzahl von untereinander unterschiedlichen Diagnosemeldungen hinterlegt sind.

3. Sicherheitssteuerung nach einem der vorstehenden Ansprüche, **dadurch gekennzeichnet, dass** die Erfassungseinheit (82) und die Anzeigeeinheit (72) eine bauliche Einheit (92) bilden.

4. Sicherheitssteuerung nach einem der vorstehenden Ansprüche, **dadurch gekennzeichnet, dass** die Erfassungseinheit (82) dazu ausgebildet ist, die Zugriffberechtigung durch Wechselwirkung mit einer mobilen Zugriffsberechtigungseinheit (94) zu erfassen.

5. Sicherheitssteuerung nach Anspruch 4, **dadurch gekennzeichnet, dass** die Zugriffsberechtigungseinheit (94) einen mechanischen Schlüssel aufweist, der in eine in der Erfassungseinheit (82) angeordnete Schlüsselaufnahme eingebracht werden kann.

6. Sicherheitssteuerung nach Anspruch 4 oder 5, **dadurch gekennzeichnet, dass** die Zugriffsberechtigungseinheit (94) einen Transponder aufweist, wobei der Transponder Zugriffsberechtigungsdaten enthält, die die Zugriffsberechtigung repräsentieren.

7. Sicherheitssteuerung nach einem der vorstehenden Ansprüche, **dadurch gekennzeichnet, dass** die Erfassungseinheit (82) eine Anzahl von Eingabeelementen aufweist, über die die Zugriffsberechtigung eingegeben werden kann.

8. Sicherheitssteuerung nach einem der vorstehenden Ansprüche, **dadurch gekennzeichnet, dass** die Betriebsartenwahleinheit (76) dazu ausgebildet ist, die Sonderbetriebsart durch Wechselwirkung mit einer mobilen Sonderbetriebsarteneinheit (98) auszuwählen.

9. Sicherheitssteuerung nach Anspruch 8, **dadurch gekennzeichnet, dass** die Sonderbetriebsarteneinheit (98) einen Transponder aufweist, der Sonderbetriebsartdaten enthält, die eine definierte Sonderbetriebsart repräsentieren.

10. Sicherheitssteuerung nach einem der vorstehenden Ansprüche, **dadurch gekennzeichnet, dass** das Anwenderprogramm (38) zumindest ein Sicherheitssteuerungsmodul (40) aufweist, in dem sicherheitsrelevante Steuerungseingangssignale (42) fehlersicher verarbeitet werden, und zumindest ein Standardsteuerungsmodul (54) aufweist, in dem überwiegend prozessrelevante Steuerungseingangssignale (56) verarbeitet werden.

11. Sicherheitssteuerung nach einem der vorstehenden Ansprüche, **dadurch gekennzeichnet, dass** der Systemzustand einen gestörten Aktor und/oder Sensor repräsentiert.

12. Sicherheitssteuerung nach Anspruch 11, **dadurch gekennzeichnet, dass** die Diagnoseauswahleinheit (86) dazu ausgebildet ist, die Diagnosemeldung zusätzlich in Abhängigkeit einer Ortsangabe zu ermitteln, wobei die Ortsangabe den Einbauort des Aktors und/oder des Sensors innerhalb der Anlage repräsentiert.

13. Verfahren zum Steuern einer automatisierten Anlage (14), die eine Vielzahl (18) von Sensoren und eine Vielzahl (16) von Aktoren umfasst, mit den Schritten:
- Zuführen einer Vielzahl (32) von Steuerungseingangssignalen von den Sensoren zu einer Steuereinheit, wobei die Steuereinheit (22) dazu ausgebildet ist, in einem Automatikbetrieb eine Vielzahl (34) von Steuerungsausgangssignalen in Abhängigkeit von den Steuerungseingangssignalen gemäß einem in ihr ablaufenden Anwenderprogramm (38) zu erzeugen, wobei mit der Vielzahl (34) von Steuerungseingangssignalen die Vielzahl (16) von Aktoren angesteuert werden,
- Feststellen in Abhängigkeit von einer Anzahl (66) von Diagnoseseingangssignalen, welcher von mehreren Betriebszuständen (122) zu einem definierten Zeitpunkt vorliegt, wobei die mehreren Betriebszustände (122) zumindest einen Prozesszustand der zu steuernden Anlage (14) und zumindest einen Systemzustand der Sicherheitssteuerung (12) beinhalten, und Erzeugen eines Betriebszustandssignals (68), welches einen festgestellten Betriebszustand repräsentiert,
- Auswählen einer von mehreren untereinander unterschiedlichen Sonderbetriebsarten, wobei sich die Sonderbetriebsarten jeweils von dem Automatikbetrieb unterscheiden, und Bereitstellen eines Sonderbetriebsartensignals (78), welches die ausgewählte Sonderbetriebsart repräsentiert,
- Erfassen einer Zugriffsberechtigung, die einer mit der Sicherheitssteuerung (12) interagierenden Person, insbesondere einer eine Anzeigeeinheit (72) ablesenden Person, zugeordnet ist, und Bereitstellen eines Zugriffsberechtigungssignals (84), welches die erfasste Zugriffsberechtigung repräsentiert,
- Zuführen des Betriebszustandssignals (68) sowie des Sonderbetriebsartensignals (78) und des Zugriffsberechtigungssignals (84) zu einer Diagnoseauswahleinheit (86),
- Ermitteln einer den festgestellten Betriebszustand repräsentierenden Diagnosemeldung in Abhängigkeit des festgestellten Betriebszustands und in Abhängigkeit der ausgewählten Sonderbetriebsart und der erfassten Zugriffsberechtigung, und Erzeugen eines die Diagnosemeldung repräsentierenden Diagnosesignals (88) in der Diagnoseauswahleinheit (86), und
- Zuführen des Diagnosesignals (88) zu der Anzeigeeinheit (72) zum Anzeigen der Diagnosemeldung,
**dadurch gekennzeichnet, dass** in der Diagnoseauswahleinheit (86) eine Vielzahl (124) von untereinander unterschiedlichen Diagnosemeldungen hinterlegt sind, wobei jede dieser Diagnosemeldungen den festgestellten Betriebszustand repräsentiert, wobei die Diagnoseauswahleinheit (86) eine dieser Diagnosemeldungen in Abhängigkeit der ausgewählten Sonderbetriebsart und der erfassten Zugriffsberechtigung auswählt, wobei die erfasste Zugriffsberechtigung eine aus einer Vielzahl von definierten, untereinander unterschiedlichen Zugriffsbezechtigungen ist, wobei die Vielzahl (124) von untereinander unterschiedlichen Diagnosemeldungen für jeden der untereinander unterschiedlichen Sonderbetriebszustände und für jede der untereinander unterschiedlichen Zugriffsberechtigungen eine jeweils zugeordnete Diagnosemeldung enthält.

14. Computerprogrammprodukt mit einem Datenträger mit Programmcode, der dazu ausgebildet ist, ein Verfahren nach Anspruch 13 durchzuführen, wenn der Programmcode auf einer Sicherheitssteuerung (12) nach einem der Ansprüche 1 bis 12 abläuft.

## Claims

1. A safety controller for controlling an automated installation (14) which comprises a plurality (18) of sensors and a plurality (16) of actuators,
having a control unit (22) to which a plurality (32) of control input signals are supplied by the sensors, wherein the control unit (22) is designed to produce a plurality (34) of control output signals on the basis of the control input signals in accordance with a user program (38) running in said control unit in an automatic mode, wherein the plurality (34) of control output signals are used to actuate the plurality (16) of actuators,
having a diagnosis evaluation unit (64) to which a number (66) of diagnosis input signals are supplied, wherein the diagnosis evaluation unit (64) is designed to take the number (66) of diagnosis input signals as a basis for ascertaining which of a plurality of operating states (122) is present at a defined instant of time, wherein the plurality of operating states (122) comprise at least one process state for the installation (14) to be controlled and at least one system state for the safety controller (12), wherein the diagnosis evaluation unit (64) produces an operating state signal (68) which represents an ascertained operating state,
having a display unit (74) to display diagnosis reports,
having an operating mode selection unit (76) designed to select one of a plurality of special operating modes which are different from one another, wherein the special operating modes each are different from the automatic mode, wherein the mode selection unit (76) provides a special operating mode signal (78) which represents the selected special operating mode, wherein said special operating mode signal (78) is supplied to the control unit (22) in order to operate the installation (14) in the selected special operating mode,
having a detection unit (82) designed to detect an access authorization associated with a person interacting with the safety controller (12), particularly with a person reading the display unit (72), wherein the detection unit (82) provides an access authorization signal (84) which represents the detected access authorization, and
having a diagnosis selection unit (86) to which the operating state signal (68) and also the special operating mode signal (78) and the access authorization signal (84) are supplied, wherein the diagnosis selection unit (86) takes the ascertained operating state and takes the selected special operating mode and the detected access authorization as a basis for determining a diagnosis report which represents the operating state, wherein the diagnosis selection unit (86) produces a diagnosis signal (88) which represents the diagnosis report and which is supplied to the display unit (72) for the purpose of displaying the diagnosis report,
**characterized in that** the diagnosis selection unit (86) stores a plurality (124) of diagnosis reports which are different from one another, wherein each of said diagnosis reports represents the ascertained operating state, wherein the diagnosis selection unit (86) selects one of said diagnosis reports on the basis of the selected special operating mode and the detected access authorization, wherein the detected access authorization is one of a plurality of defined access authorizations which are different from one another, wherein the plurality (124) of diagnosis reports which are different from one another comprises a respective associated diagnosis report for each of the special operating modes which are different from one another and for each of the access authorizations which are different from one another.

2. The safety controller of claim 1, **characterized in that** a plurality of diagnosis reports which are different from one another are stored for each of the plurality of operating states (122).

3. The safety controller of one of the preceding claims, **characterized in that** the detection unit (82) and the display unit (72) form a structural unit (92).

4. The safety controller of one of the preceding claims, **characterized in that** the detection unit (82) is designed to detect the access authorization by virtue of interaction with a mobile access authorization unit (94).

5. The safety controller of claim 4, **characterized in that** the access authorization unit (94) has a mechanical key which can be put into a key holder arranged in the detection unit (82).

6. The safety controller of claim 4 or 5, **characterized in that** the access authorization unit (94) has a transponder, wherein the transponder comprises access authorization data representing the access authorization.

7. The safety controller of one of the preceding claims, **characterized in that** the detection unit (82) has a number of input elements which can be used to input the access authorization.

8. The safety controller of one of the preceding claims, **characterized in that** the mode selection unit (76) is designed to select the special operating mode by virtue of interaction with a mobile special operating mode unit (98).

9. The safety controller of claim 8, **characterized in that** the special operating mode unit (98) has a transponder which comprises special operating mode data which represent a defined special operating mode.

10. The safety controller of one of the preceding claims, **characterized in that** the user program (38) has at least one safety control module (40), in which safetyrelated control input signals (42) are processed in a failsafe manner, and has at least one standard control module (54), in which predominantly processrelated control input signals (56) are processed.

11. The safety controller of one of the preceding claims, **characterized in that** the system state represents a faulty actuator and/or sensor.

12. The safety controller of claim 11, **characterized in that** the diagnosis selection unit (86) is designed to determine the diagnosis report also on the basis of a Location statement, wherein the location statement represents the location of the actuator and/or of the sensor within the installation.

13. A method for controlling an automated installation (14) which comprises a plurality (18) of sensors and a plurality (16) of actuators, the method comprising the following steps:
- supplying a plurality (32) of control input signals to a control unit by the sensors, wherein the control unit (22) is designed to produce a plurality (34) of control output signals in an automatic mode on the basis of the control input signals in accordance with a user program (38) running in said control unit, wherein the plurality (34) of control output signals are used to actuate the plurality (16) of actuators,
- ascertaining which of a plurality of operating states (122) is present at a defined instant of time on the basis of a number (66) of diagnosis input signals, wherein the plurality of operating states (122) comprise at least one process state for the installation (14) to be controlled and at least one system state for the safety controller (12), and producing an operating state signal (68) which represents an operating state,
- selecting one of a plurality of special operating modes which are different from one another, wherein the special operating modes each are different from the automatic mode, and providing a special operating mode signal (78) which represents the selected special operating mode,
- detecting an access authorization which is associated with a person interacting with the safety controller (12), particularly with a person reading a display unit (72), and providing an access authorization signal (84) which represents the detected access authorization,
- supplying the operating state signal (68) and the special operating mode signal (78) and the access authorization signal (84) to a diagnosis selection unit (86),
- determining a diagnosis report representing the ascertained operating state on the basis of the ascertained operating state and on the basis of the selected special operating mode and the detected access authorization, and producing a diagnosis signal (88) representing the diagnosis report in the diagnosis selection unit (86), and
- supplying the diagnosis signal (88) to the display unit (72) for the purpose of displaying the diagnosis report,
**characterized in that** the diagnosis selection unit (86) stores a plurality (124) of diagnosis reports which are different from one another, wherein each of said diagnosis reports represents the ascertained operating state, wherein the diagnosis selection unit (86) selects one of said diagnosis reports on the basis of the selected special operating mode and the detected access authorization, wherein the detected access authorization is one of a plurality of defined access authorizations which are different from one another, wherein the plurality (124) of diagnosis reports which are different from one another comprises a respective associated diagnosis report for each of the special operating modes which are different from one another and for each of the access authorizations which are different from one another.

14. A computer program product comprising a data storage medium having program code which is designed to carry out a method according to claim 13 when the program code is executed on a safety controller (12) according to one of claims 1 to 12.

## Revendications

1. Commande de sécurité pour commander une installation automatisée (14), qui comprend une pluralité (18) de capteurs et une pluralité (16) d'actionneurs,
comportant une unité de commande (22), dans laquelle une pluralité (32) de signaux d'entrée de commande provenant des capteurs sont alimentés, dans laquelle l'unité de commande (22) est conçue afin de produire lors d'un fonctionnement automatique une pluralité (34) de signaux de sortie de commande en fonction des signaux d'entrée de commande selon un programme d'utilisateur (38) s'y déroulant, dans laquelle la pluralité (16) d'actionneurs sont pilotés avec la pluralité (34) de signaux de sortie de commande,
comportant une unité d'évaluation de diagnostic (64), dans laquelle un nombre (66) de signaux d'entrée de diagnostic sont alimentés, dans laquelle l'unité d'évaluation de diagnostic (64) est conçue afin de déterminer, en fonction du nombre (66) de signaux d'entrée de diagnostic, lequel de plusieurs états de fonctionnement (122) est présent à un moment défini, dans laquelle les plusieurs états de fonctionnement (122) contiennent au moins un état de processus de l'installation à commander (14) et au moins un état de système de la commande de sécurité (12), dans laquelle l'unité d'évaluation de diagnostic (64) produit un signal d'état de fonctionnement (68), qui représente un état de fonctionnement déterminé,
comportant une unité d'affichage (74), qui est conçue afin d'afficher des rapports de diagnostic,
comportant une unité de sélection de mode de fonctionnement (76), qui est conçue afin de sélectionner un de plusieurs modes de fonctionnement particulier différents les uns des autres, dans laquelle les modes de fonctionnement particulier se différencient respectivement du fonctionnement automatique, dans laquelle l'unité de sélection de mode de fonctionnement (76) fournit un signal de mode de fonctionnement particulier (78), qui représente le mode de fonctionnement particulier sélectionné, dans laquelle ce signal de mode de fonctionnement particulier (78) est alimenté dans l'unité de commande (22), afin de faire fonctionner l'installation (14) dans le mode de fonctionnement particulier sélectionné,
comportant une unité de détection (82), qui est conçue afin de détecter une autorisation d'accès, qui est affectée à une personne interagissant avec la commande de sécurité (12), notamment une personne lisant l'unité d'affichage (72), dans laquelle l'unité de détection (82) fournit un signal d'autorisation d'accès (84), qui représente l'autorisation d'accès détectée, et
comportant une unité de sélection de diagnostic (86), dans laquelle le signal d'état de fonctionnement (68) ainsi que le signal de mode de fonctionnement particulier (78) et le signal d'autorisation d'accès (84) sont alimentés, dans laquelle l'unité de sélection de diagnostic (86) détermine en fonction de l'état de fonctionnement déterminé et en fonction du mode de fonctionnement particulier sélectionné et de l'autorisation d'accès détectée un rapport de diagnostic représentant l'état de fonctionnement déterminé, dans laquelle l'unité de sélection de diagnostic (86) produit un signal de diagnostic (88) représentant le rapport de diagnostic, qui est alimenté dans l'unité d'affichage (72) afin d'afficher le rapport de diagnostic,
**caractérisée en ce que** dans l'unité de sélection de diagnostic (86) une pluralité (124) de rapports de diagnostic différents les uns des autres sont enregistrés, dans laquelle chacun de ces rapports de diagnostic représente l'état de fonctionnement déterminé, dans laquelle l'unité de sélection de diagnostic (86) sélectionne un de ces rapports de diagnostic en fonction du mode de fonctionnement particulier sélectionné et de l'autorisation d'accès détectée, dans laquelle l'autorisation d'accès détectée est une d'une pluralité d'autorisations d'accès définies, différentes les unes des autres, dans laquelle la pluralité (124) de rapports de diagnostic différents les uns des autres contient pour chacun des états de fonctionnement particulier différents les uns des autres et pour chacune des autorisations d'accès différentes les unes des autres un rapport de diagnostic respectivement coordonné.

2. Commande de sécurité selon la revendication 1, **caractérisée en ce que** pour chacun des plusieurs états de fonctionnement (122) une pluralité de rapports de diagnostic différents les uns des autres sont enregistrés.

3. Commande de sécurité selon une des revendications précédentes, **caractérisée en ce que** l'unité de détection (82) et l'unité d'affichage (72) forment une unité structurelle (92).

4. Commande de sécurité selon une des revendications précédentes, **caractérisée en ce que** l'unité de détection (82) est conçue afin de détectier l'autorisation d'accès par interaction avec une unité d'autorisation d'accès (94) mobile.

5. Commande de sécurité selon la revendication 4, **caractérisée en ce que** l'unité d'autorisation d'accès (94) présente une clé mécanique, qui peut être insérée dans un réceptacle de clé disposé dans l'unité de détection (82).

6. Commande de sécurité selon la revendication 4 ou 5, **caractérisée en ce que** l'unité d'autorisation d'accès (94) présente un transpondeur, dans laquelle le transpondeur contient des données d'autorisation d'accès, qui représentent l'autorisation d'accès.

7. Commande de sécurité selon une des revendications précédentes, **caractérisée en ce que** l'unité de détection (82) présente une pluralité d'éléments d'entrée, via lesquels l'autorisation d'accès peut être entrée.

8. Commande de sécurité selon une des revendications précédentes, **caractérisée en ce que** l'unité de sélection de mode de fonctionnement (76) est conçue afin de sélectionner le mode de fonctionnement particulier par interaction avec une unité de mode de fonctionnement particulier (98) mobile.

9. Commande de sécurité selon la revendication 8, **caractérisée en ce que** l'unité de mode de fonctionnement particulier (98) présente un transpondeur, qui contient des données de mode de fonctionnement particulier, qui représentent un mode de fonctionnement particulier défini.

10. Commande de sécurité selon une des revendications précédentes, **caractérisée en ce que** le programme utilisateur (38) présente au moins un module de commande de sécurité (40), dans lequel des signaux d'entrée de commande (42) capitaux pour la sécurité sont traités de manière sécurisée contre les erreurs, et présente au moins un module de commande standard (54), dans lequel des signaux d'entrée de commande (56) essentiellement capitaux pour le processus sont traités.

11. Commande de sécurité selon une des revendications précédentes, **caractérisée en ce que** l'état de système représente un actionneur et/ou capteur déréglé.

12. Commande de sécurité selon la revendication 11, **caractérisée en ce que** l'unité de sélection de diagnostic (86) est conçue afin de déterminer le rapport de diagnostic en outre en fonction d'une indication locale, dans laquelle l'indication locale représente l'emplacement de montage de l'actionneur et/ou du capteur à l'intérieur de l'installation.

13. Procédé de commande d'une installation automatisée (14), qui comprend une pluralité (18) de capteurs et une pluralité (16) d'actionneurs, avec les étapes consistant à :
- alimenter une pluralité (32) de signaux d'entrée de commande provenant des capteurs dans une unité de commande, dans laquelle l'unité de commande (22) est conçue afin de produire lors d'un fonctionnement automatique une pluralité (34) de signaux de sortie de commande en fonction des signaux d'entrée de commande selon un programme d'utilisateur (38) s'y déroulant, dans laquelle la pluralité (16) d'actionneurs sont pilotés avec la pluralité (34) de signaux de sortie de commande,
- déterminer, en fonction d'un nombre (66) de signaux d'entrée de diagnostic, lequel de plusieurs états de fonctionnement (122) est présent à un moment défini, les plusieurs états de fonctionnement (122) contenant au moins un état de processus de l'installation à commander (14) et au moins un état de système de la commande de sécurité (12) et produire un signal d'état de fonctionnement (68), qui représente un état de fonctionnement déterminé,
- sélectionner un de plusieurs modes de fonctionnement particulier différents les uns des autres, les modes de fonctionnement particulier se différenciant respectivement du fonctionnement automatique, et fournir un signal de mode de fonctionnement particulier (78), qui représente le mode de fonctionnement particulier sélectionné,
- détecter une autorisation d'accès, qui est affectée à une personne interagissant avec la commande de sécurité (12), notamment une personne lisant une unité d'affichage (72), et fournir un signal d'autorisation d'accès (84), qui représente l'autorisation d'accès détectée,
- alimenter le signal d'état de fonctionnement (68) ainsi que le signal de mode de fonctionnement particulier (78) et le signal d'autorisation d'accès (84) dans une unité de sélection de diagnostic (86),
- déterminer un rapport de diagnostic représentant l'état de fonctionnement déterminé en fonction de l'état de fonctionnement déterminé et en fonction du mode de fonctionnement particulier sélectionné et de l'autorisation d'accès détectée, et produire un signal de diagnostic (88) représentant le rapport de diagnostic dans l'unité de sélection de diagnostic (86), et
- alimenter le signal de diagnostic (88) dans l'unité d'affichage (72) afin d'afficher le rapport de diagnostic,
**caractérisé en ce que** dans l'unité de sélection de diagnostic (86) une pluralité (124) de rapports de diagnostic différents les uns des autres sont enregistrés, dans lequel chacun de ces rapports de diagnostic représente l'état de fonctionnement déterminé, dans lequel l'unité de sélection de diagnostic (86) sélectionne un de ces rapports de diagnostic en fonction du mode de fonctionnement particulier sélectionné et de l'autorisation d'accès détectée, dans lequel l'autorisation d'accès détectée est une d'une pluralité d'autorisations d'accès définies, différentes les unes des autres, dans lequel la pluralité (124) de rapports de diagnostic différents les uns des autres contient pour chacun des états de fonctionnement particulier différents les uns des autres et pour chacune des autorisations d'accès différentes les unes des autres un rapport de diagnostic respectivement coordonné.

14. Produit de programme informatique comportant un support de données avec un code de programme, qui est conçu afin de mettre en oeuvre un procédé selon la revendication 13, quand le code de programme s'exécute sur une commande de sécurité (12) selon une des revendications 1 à 12.
